# EUROPÄISCHE PATENTSCHRIFT

(11) **EP 1 865 016 B1**
(45) Veröffentlichungstag und Bekanntmachung des Hinweises auf die Patenterteilung: **26.11.2008**
(21) Anmeldenummer: 07114832.4
(22) Anmeldetag: 14.08.2003
(51) Int. Cl.: C08G 77/38, C08G 77/42, C08B 37/00, C07F 7/00

(54) **Cyclodextrinreste aufweisende Organosiliciumverbindungen**
Organosilicon compounds comprising cyclodextrin radicals
Support d'enregistrement, procédé d'enregistrement, appareil de reproduction et procédé et programme lisible sur un ordinateur

(30) Priorität: 23.08.2002 DE 10238818
(43) Veröffentlichungstag der Anmeldung: 12.12.2007
(62) Teilanmeldung aus: 03792323.2
(73) Patentinhaber: Wacker Chemie AG, 81737 München (DE)
(72) Erfinder: Ochs, Christian, 84489, Burghausen (DE); Habereder, Peter, 82152, Krailing (DE); Kaluza, Gloria, 84489, Burghausen (DE)
(74) Vertreter: Budczinski, Angelika

(56) Entgegenhaltungen:
- DE-A- 19 520 989
- DE-A- 19 831 073
- US-A- 5 403 898

## Beschreibung

Die Erfindung betrifft Cyclodextrinreste aufweisende Organosiliciumverbindungen, deren Herstellung, deren Verwendung, insbesondere in der Textilausrüstung, sowie vernetzbare Massen auf der Basis von Cyclodextrinreste aufweisenden Organosiliciumverbindungen.

Organosiliciumverbindungen, insbesondere Organosilane und Organosiloxane, sind bereits seit langem bekannt und finden unter anderem als Textilweichmacher Anwendung.

Cylcodextrine sind cyclische Oligosaccharide die aus 6, 7 oder 8 α(1-4) verknüpften Anhydroglycoseeinheiten aufgebaut sind. Die durch enzymatische Stärkekonversion hergestellten α-, β-, oder γ-Cyclodextrine unterscheiden sich in dem Durchmesser ihrer hydrophoben Kavität und eignen sich generell zum Einschluss zahlreicher lipophiler Substanzen.

Cyclodextrinderivate werden durch chemische Modifizierung an den OH-Gruppen des Cyclodextrins hergestellt. Beispiele hierfür sind die Hydroxypropylierung mittels Propylenoxid und die Methylierung mit Hilfe von Methylhalogeniden. Die so erhaltenen Cyclodextrinderivate sind wesentlich stärker wasserlöslich als native Cyclodextrine und können durch Einschluss hydrophober Substanzen und Bildung wasserlöslicher Komplexe solche an sich wasserunlöslichen Substanzen im wässrigen Medium solubilisieren. Des weiteren werden in DE-A 195 20 967 reaktive Cyclodextrinderivate mit mindestens einem stickstoffhaltigen Heterozyclus beschrieben, welche zur Ausrüstung von textilen Materialien oder Leder eingesetzt werden können. Während unsubstituierte oder mit Methyl- bzw. Hydroxypropylgruppen substituierte Cyclodextrine nur mit Hilfe von Bindersystemen auf textilen Substraten fixiert werden können ist das Monochlortriazinderivat in völliger Analogie zu Reaktivfarbstoffen zur Bildung einer echten kovalenten Bindung mit den OH-Gruppen des cellulosischen Textilsubstrates fähig. Dazu müssen allerdings "Färbebedingungen" eingehalten werden, d.h. die Cellulose ist im allgemeinen nur nach Aktivierung durch Alkali und bei erhöhter Temperatur reaktionsfähig genug, um diese Bindung einzugehen. Als Konkurrenzreaktion tritt dabei die Hydrolyse des Chlortriazinrestes ein. Aus der Färberei ist bekannt, dass Reaktivfarbstoffe daher meist nur mit rund 50 %iger Ausbeute aufziehen und die andere Hälfte durch Hydrolyse verloren geht. Mit einem ähnlichen Verhältnis ist bei der Umsetzung des cellulosischen Textilsubstrates mit einem Monochlortriazin-funktionellen Cyclodextrin zu rechnen.

Organosiliciumverbindungen mit kovalent gebundenen Cyclodextrinresten sind im Bereich der chromatographischen Trennungs-Analytik bekannt. Die an einem Trägermaterial, wie etwa Silicagel, immobilisierten, cyclodextrinhaltigen Polymere dienen insbesondere als chirale stationäre Phasen zur Enantiomerentrennung von organischen Verbindungen. Daneben finden spezielle Siloxan-Cyclodextrin-Copolymere als Kontaktlinsenmaterial oder in ionensensitiven Elektroden Verwendung. Hierzu sei beispielsweise auf DE-A-43 24 636, US-A 5,268,442, US-A 5,403,898 und EP-A 586 322 verwiesen. In allen Fällen handelt es sich um mehrstufige, zeitaufwendige Synthesen auf der Basis von Hydrosilylierungsreaktionen, die nur in geringer Ausbeute die gewünschten Materialien liefern.

Ferner sind Block-Copolymere mit Cyclodextrin in der Polymerkette bekannt. Die Copolymerenbildung kann auf zwei Arten erfolgen. M. B. Ali et al., Mater. Sci. Eng. C 1998, C6, 53 setzen eine oder mehrere Hydroxygruppen des Cyclodextrinmoleküls direkt mit Hydromethylsiloxy-Einheiten enthaltenden Polyorganosiloxanen unter Wasserstoffabspaltung um. Die erhaltenen Materialien finden als Membrangele in ionensensitiven Elektroden Anwendung. Maciejewski et al. PL-B-178362 dagegen bevorzugen die unter HCl-Abspaltung verlaufende Polykondensation OHhaltiger Cyclodextrin-Derivate mit Chlorsilanen. In beiden Fällen entstehen Cyclodextrin-Silicon-Block-Copolymere, in denen das Cyclodextrin-Molekül integraler Bestandteil des Polymernetzwerks ist und als Bindeglied bzw. Verzweigungsstelle zwischen den Siloxanblöcken fungiert. Bedingt durch die SiOC-Verknüpfung sind die Copolymere unter nicht-neutralen Bedingungen nicht hydrolysestabil. Weiterer Nachteil der genannten Verfahren ist einerseits die Freisetzung von Wasserstoff, die im technischen Maßstab erhebliche Probleme mit sich bringt, sowie im Falle von PL-B-178362 die uneinheitliche Copolymerzusammensetzung, die allein durch statistische Effekte gesteuert wird.

Neben den bisher genannten Verfahren findet man in der Literatur auch vereinzelte Beispiele für Verknüpfungen über Carbon- oder Kohlensäure-Derivate. Auch die Säure-katalysierte Epoxid-Ringöffnung durch die Hydroxygruppen des Cyclodextrin-Moleküls wurde in der Vergangenheit bereits beschrieben. Beispiele hierzu sind S. K. Young et al. (Polym. Prepr. 2001, 42, 162), M. Tanaka et al. (Fresenius Z. Anal. Chem. 1983, 316, 54) sowie DE-A-42 08 402. Auch hier sind wiederum kostenintensive Reagenzien sowie die mehrstufigen Syntheseverfahren von Nachteil.

Cyclodextrinreste aufweisende Organosiliciumverbindungen enthaltend Einheiten der Formel

AₐR_{b}X_{c}H_{d}SiO_{(4-a-b-c-d)/2} (I),

wobei
A gleich oder verschieden sein kann und einen Rest der Formel

CD-R²- (II)

bedeutet, wobei
CD ein- oder mehrwertiger, gegebenenfalls derivatisierter Cyclodextrinrest bedeutet und R² ein zweiwertiger, gegebenenfalls substituierter Kohlenwasserstoffrest bedeutet, der mit Sauerstoff, Mercapto-, Amin-, Carbonyl-, Carboxyl-, Sulfoxid- oder Sulfonylgruppen unterbrochen sein kann,
R gleich oder verschieden sein kann und einen gegebenenfalls substituierten Kohlenwasserstoffrest, der durch Sauerstoffatome, Schwefelatome und/oder Stickstoffatome unterbrochen sein kann, bedeutet,
X gleich oder verschieden sein kann und einen Rest der Formel -OR¹ mit R¹ gleich Wasserstoffatom oder gegebenenfalls substituierten Kohlenwasserstoffrest, der durch Ethersauerstoffatome substituiert sein kann, bedeutet,
a 0, 1 oder 2, bevorzugt 0 oder 1, ist
b 0, 1, 2 oder 3 ist,
c 0, 1, 2 oder 3, bevorzugt 0 oder 1, ist und
d 0, 1, 2 oder 3, bevorzugt 0, ist,
mit der Maßgabe, dass
- die Summe a+b+c+d ≤ 4 ist,
- die Organosiliciumverbindung pro Molekül mindestens einen Rest A aufweist,
- in maximal 90% der Einheiten der Formel (I), bevorzugt maximal 50%, besonders bevorzugt maximal 30%, insbesondere in keiner Einheit der Formel (I), die Summe aus a+b+c+d=0 ist,
- im Fall von Organosiliciumverbindungen der Formel (I) mit a+b+c+d=4 Rest R² nicht Triazinylenrest bedeuten kann,
- im Fall von Organosiliciumverbindungen aus Einheiten der Formel (I) mit a+b+c+d ≤ 3 Rest R² nicht ein rein aliphatisches, d.h. ausschließlich aus Kohlenstoff-Kohlenstoff-Einfachbindungen aufgebautes, und ω-SiC-artig mit der Organosiliciumverbindung verknüpftes α-Carbon- oder α-Kohlensäure-Derivat, wie Carbonsäureester, Thiolcarbonsäurester, Carbonsäureamid, Thioncarbonsäureamid, Urethan, S-Thiourethan oder Harnstoffderivat, sein kann,
- im Fall von Organosiliciumverbindungen aus Einheiten der Formel (I) mit a+b+c+d ≤ 3 Rest R² nicht zweiwertiger Kohlenwasserstoffrest, ausgewählt aus der Gruppe -CH₂-CHOH-CH₂-O-(CH₂)₃-,
- (CH₂)ₑ-, -Ar-(CH₂)ₑ-, -Ar-O-(CH₂)ₑ-, -Ar-S-(CH₂)ₑ-, -Ar-NH-(CO)-(CH₂)ₑ- oder -(CO)-Ar-O-(CH₂)ₑ-, worin e gleich 0-16 und Ar gleich Phenylen-, Pyridylen- oder Furanylenrest ist, bedeuten kann, wobei das zur chemischen Bindung von CD an R² verwendete Cyclodextrin-Sauerstoffatom gegen S, NH oder NR⁰ mit R⁰ gleich einer für Rest R oben angegebener Bedeutung, ersetzt sein kann.

Gegenstand der Erfindung sind Cyclodextrinreste aufweisende Organosiliciumverbindungen enthaltend Einheiten der Formel

AₐR_{b}X_{c}H_{d}SiO_{(4-a-b-c-d)/2} (I),

wobei
A gleich oder verschieden sein kann und einen Rest der Formel

CD-R²- (II)

bedeutet, wobei
CD ein- oder mehrwertiger, gegebenenfalls derivatisierter Cyclodextrinrest bedeutet und R² ein gegebenenfalls substituierter Triazinylrest bedeutet,
R gleich oder verschieden sein kann und einen gegebenenfalls substituierten Kohlenwasserstoffrest, der durch Sauerstoffatome, Schwefelatome und/oder Stickstoffatome unterbrochen sein kann, bedeutet,
X gleich oder verschieden sein kann und einen Rest der Formel -OR¹ mit R¹ gleich Wasserstoffatom oder gegebenenfalls substituierten Kohlenwasserstoffrest, der durch Ethersauerstoffatome substituiert sein kann, bedeutet,
a 0, 1 oder 2 ist
b 0, 1, 2 oder 3 ist,
c 0, 1, 2 oder 3 ist und
d 0, 1, 2 oder 3 ist,
mit der Maßgabe, dass
- die Summe a+b+c+d ≤ 3 ist,
- die Organosiliciumverbindung pro Molekül mindestens einen Rest A aufweist und
- in keiner Einheit der Formel (I) die Summe aus a+b+c+d=0 ist,
wobei das zur chemischen Bindung von CD an R² verwendete Cyclodextrin-Sauerstoffatom gegen S, NH oder NR⁰ mit R⁰ gleich einer für Rest R oben angegebener Bedeutung, ersetzt sein kann.

Im Rahmen der vorliegenden Erfindung sollen von dem Begriff Organopolysiloxane sowohl polymere, oligomere wie auch dimere Siloxane mitumfaßt werden.

Vorzugsweise handelt es sich bei den erfindungsgemäßen Organosiliciumverbindungen um Organopolysiloxane, insbesondere um solche, die aus Einheiten der Formel (I) bestehen.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, Aminoalkylreste, wie der Aminopropyl-, Aminoethylaminopropyl-, Cyclohexylaminopropyl-, Dimethylaminopropyl-, Diethylaminopropylrest oder acetylierte Aminopropylreste, Hydroxyfunktionelle Reste, wie die von prim., sek. oder tert. Alkoholen, wie z.B. der 3-Hydroxypropyl- und 4-Hydroxybutylrest, oder wie die aromatischer Alkohole, wie z.B. der Phenol- oder Eugenolrest, mercaptofunktionelle Reste, wie der 3-Mercaptopropylrest, carbonsäurefunktionelle Reste sowie deren Derivate oder Salze, wie der Essigsäure-, 3-Carboxypropyl-, 4-Carboxy-butyl-, 10-Carboxy-decyl-, 3-(2,5-Dioxotetrahydrofuranyl)-propyl-, 3-(Ethan-1,2-dicarbonsäure)-propyl-, 3-Acryloxy-propyl-, 3-Methacryloxy-propyl- oder Undecensilylesterrest, epoxyfunktionelle Reste der Gruppe bestehend aus 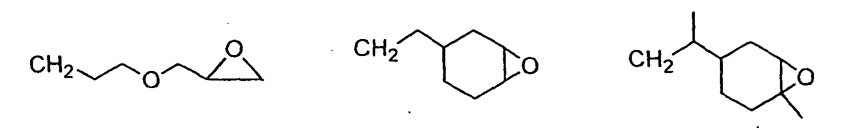 carbonylfunktionelle Reste wie der Propionaldehydrest, polyglykolfunktionelle Reste, wie z.B. Alkylpolyglykolreste, wie der Propylpolyglykolrest, phosphonatofunktionelle Reste, wie z.B. Phosphonatoalkylreste, silalactonfunktionelle Reste, glykosidfunktionelle Reste, wie z.B. solche, bei denen der Glykosidrest, der aus 1 bis 10 Monosaccarideinheiten aufgebaut sein kann, über einen Alkylen- oder Oxyalkylenspacer gebunden ist, sowie die in EP-A-612 759, Seite 2 Zeile 11 bis Seite 3 Zeile 53 genannten Reste.

Bevorzugt handelt es sich bei Rest R um gegebenenfalls mit Hydroxy-, Mercapto-, Amin-, Carbonyl-, Carboxyl- oder Oxiranylgruppen substituierte Kohlenwasserstoffreste mit 1 bis 18 Kohlenstoffatomen, besonders bevorzugt um gegebenenfalls mit Hydroxy-, Mercapto-, Amin-, Carbonyl-, Carboxyl- oder Oxiranylgruppen substituierte Kohlenwasserstoffreste mit 1 bis 11 Kohlenstoffatomen, insbesondere um den Methyl-, Hydroxypropyl-, Mercaptopropyl-, 3-Glycidoxy-propyl-, Aminopropyl- und Aminoethylaminopropyl-, 10-Carboxy-Decyl-, 3-Acryloxy-propyl- und den 3-Methacryloxy-propyl-rest.

Falls es sich bei den erfindungsgemäßen Organosiliciumverbindungen um Organopolysiloxane handelt, haben mindestens 50%, besonders bevorzugt mindestens 90%, aller Reste R die Bedeutung von Methylrest.

Beispiele für Reste R¹ sind die für Rest R angegebenen Beispiele.

Bevorzugt handelt es sich bei Rest R¹ um Wasserstoffatom oder einen Alkylrest mit 1 bis 8 Kohlenstoffatomen, besonders bevorzugt um Wasserstoffatom, den Methyl- oder den Ethylrest.

Bevorzugt handelt es sich bei Rest X um Hydroxylrest, Methoxy- oder Ethoxyrest.

Bevorzugt handelt es sich bei X um Hydroxylrest, Methoxy- und Ethoxyrest.

Bei den Resten CD kann es sich um beliebige und bisher bekannte Cyclodextrine bzw. Cyclodexrinderivate, bei denen ein oder mehrere an Sauerstoff gebundene Wasserstoffatome durch eine chemische Bindung ersetzt sind. Vorzugsweise handelt es sich bei den Resten CD um solche der allgemeinen Formel 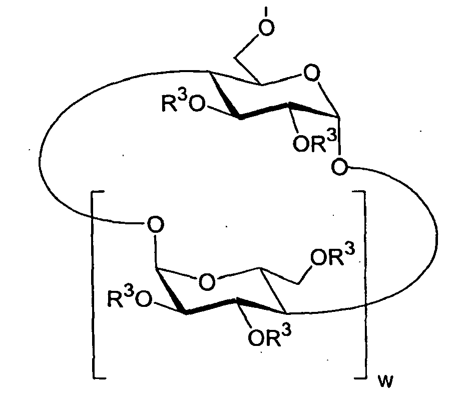 wobei R³ gleich oder verschieden sein kann und Wasserstoffatom, einen einwertigen Rest mit einer für R angegebenen Bedeutung oder einen zweiwertigen Rest mit einer für R² angegebenen Bedeutung darstellt, und w gleich 5, 6 oder 7 ist.

Bevorzugt handelt es sich bei Rest R³ um Wasserstoffatom,einen gegebenenfalls mit Amin-, Carbonyl-, Carboxyl- oder Oxiranylgruppen substituierten ein- oder mehrwertigen Kohlenwasserstoffrest, einen Polyetherrest, der gegebenenfalls mit Hydroxy-, Mercapto-, Amin-, Ammonium-, Carbonyl-, Carboxyl-, Oxiranyl- oder reaktiven Sulfonsäurederivat-Gruppen substituiert sein kann, oder einen halogentriazinfunktionellen Rest.

Besonders bevorzugt handelt es sich bei Rest R³ um Wasserstoffatom, einwertiger Alkylrest, Acetylrest, Amino-, Epoxy-, Vinylsulfonyl-, 2-Sulfooxyethyl-sulfonyl-, 2-Chlorethyl-sulfonyl- und (Meth)acryloylfunktioneller Alkyl- oder Polyetherrest sowie halogentriazinfunktioneller Rest, insbesondere um Wasserstoffatom, den Methyl-, Ethyl- oder Propylrest, den Acetylrest, den β-Aminoethyl-, β-(N-Methyl)aminoethyl-, γ-Aminopropyl-, γ-(N-tert.-Butyl)amino-2-hydroxy-propyl- und γ-(N-Cyclohexyl)amino-2-hydroxy-propyl-rest, den Glycidoxypropylrest, den 3-(Vinylsulfonyl)-propyl-, Vinylsulfonyl-, (2-Sulfooxyethyl)sulfonyl-, (2-Chloroethyl)sulfonyl-, *p*-Vinylsulfonyl-phenyl-, *p*-(2-Sulfooxyethyl)sulfonyl-phenyl- und ω-Vinyl-sulfonoyl-polyoxypropylrest, der Acryloyl-, 2-(N-Acrylamido)ethyl-, 3-(N-Acrylamido)-propyl- und 2-Hydroxy-3-methacryloyl-oxypropyl-rest sowie den 4-Chlor-6-ONa-Triazinylrest.

Beispiele für Rest R² sind -C₃H₆-O-CH₂-CHOH-CH₂-, -C₃H₆-O-(C₂H₄O)₁₀-CH₂-CHOH-CH₂-, -C₃H₆-O-C₆H₁₀O₄-O-CH₂-CHOH-CH₂-, -C₃H₆-C₆H₄(OCH₃)-O-CH₂-CHOH-CH₂-, -C₃H₆-S-CH₂-CHOH-CH₂-, -C₃H₆-NH-CH₂-CHOH-CH₂-, -C₃H₆-NH-C₂H₄-NH-CH₂-CHOH-CH₂-, -C₁₀H₂₀-COO-CH₂-CHOH-CH₂-, -C₃H₆-NH-CH₂-CHOH-CH₂-O-C₃H₆-, -C₃H₆-NH-C₂H₄-NH-CH₂-CHOH-CH₂-O-C₃H₆-, -C₃H₆-O-CH₂-CHOH-CH₂-NH-C₂H₄-, -C₃H₆-O-CH₂-CHOH-CH₂-N(CH₃)-C₂H₄-, -C₃H₆-O-CH₂-CHOH-CH₂-NH-C₃H₆-, -C₃H₆-O-CH₂-CHOH-CH₂-NH-CH₂-CHOH-CH₂-, -C₃H₆-O-CH₂-CHOH-CH₂-N(t-Bu)-CH₂-CHOH-CH₂-, -C₃H₆-O-CH₂-CHOH-CH₂-N(C₆H₁₁)-CH₂-CHOH-CH₂-, -C₃H₆-O-(CO)-CH₂-CH₂-NH-CH₂-CHOH-CH₂-, -C₃H₆-O-(CO)-CH(CH₃)-CH₂-NH-CH₂-CHOH-CH₂-, -C₃H₆-O-CH₂-CH₂-(CO)NH-C₂H₄-, -C₃H₆-S-CH₂-CH₂-(CO)NH-C₂H₄-, -C₃H₆-NH-CH₂-CH₂- (CO)NH-C₂H₄-, -C₃H₆-NH-C₂H₄-CH₂-CH₂-(CO)NH-C₂H₄-, -C₁₀H₂₀-COO-CH₂-CH₂-(CO)NH-C₂H₄-, -C₃H₆-C₆H₄(OCH₃)-O-CH₂-CH₂- (CO) NH-C₂H₄-, -C₃H₆-O-C₆H₁₀O₄-O-CH₂-CH₂-(CO)NH-C₂H₄-, -C₃H₆-O-CH₂-CH₂-(CO)NH-C₃H₆-, -C₃H₆-S-CH₂-CH₂-(CO)NH-C₃H₆-, -C₃H₆-NH-CH₂-CH₂-(CO)NH-C₃H₆-, -C₃H₆-NH-C₂H₄-CH₂-CH₂-(CO)NH-C₃H₆-, -C₁₀H₂₀-COO-CH₂-CH₂-(CO)NH-C₃H₆-, -C₃H₆-C₆H₄(OCH₃)-O-CH₂-CH₂-(CO)NH-C₃H₆-, -C₃H₆-O-C₆H₁₀O₄-O-CH₂-CH₂-(CO)NH-C₃H₆-, -C₃H₆-O-CH₂-CH₂-(CO)NH-CH₂-CHOH-CH₂-, -C₃H₆-S-CH₂-CH₂-(CO)NH-CH₂-CHOH-CH₂-, -C₃H₆-NH-CH₂-CH₂-(CO)NH-CH₂-CHOH-CH₂-, -C₃H₆-NH-C₂H₄-CH₂-CH₂-(CO)NH-CH₂-CHOH-CH₂-, -C₁₀H₂₀-COO-CH₂-CH₂-(CO)NH-CH₂-CHOH-CH₂-, -C₂H₄-C₆H₄(CH₃)-O-CH₂-CH₂-(CO) NH-CH₂-CHOH-CH₂-, -C₃H₆-O-C₆H₁₀O₄-O-CH₂-CH₂-(CO)NH-CH₂-CHOH-CH₂-, -C₃H₆-O-CH₂-CH₂-COO-C₃H₆-, -C₃H₆-S-CH₂-CH₂-COO-C₃H₆-, -C₃H₆-NH-CH₂-CH₂-COO-C₃H₆-, -C₃H₆-NH-C₂H₄-CH₂-CH₂-COO-C₃H₆-, -C₁₀H₂₀-COO-CH₂-CH₂-COO-C₃H₆-, -C₃H₆-C₆H₄(OCH₃)-O-CH₂-CH₂-COO-C₃H₆-, -C₃H₆-O-C₆H₁₀O₄-O-CH₂-CH₂-COO-C₃H₆-, -C₃H₆-O-CH₂-CH₂-COO-CH₂-CHOH-CH₂-(OC₃H₆)₀₋₁₀-, -C₃H₆-S-CH₂-CH₂-COO-CH₂-CHOH-CH₂-(OC₃H₆)₀₋₁₀-, -C₃H₆-NH-CH₂-CH₂-COO-CH₂-CHOH-CH₂-(OC₃H₆)₀₋₁₀-, -C₃H₆-NH-C₂H₄-CH₂-CH₂-COO-CH₂-CHOH-CH₂-(OC₃H₆)₀₋₁₀-, -C₁₀H₂₀-COO-CH₂-CH₂-COO-CH₂-CHOH-CH₂-(OC₃H₆)₀₋₁₀-, -C₃H₆-C₆H₄(OCH₃)-O-CH₂-CH₂-COO-CH₂-CHOH-CH₂-(OC₃H₆)₀₋₁₀-, -C₃H₆-O-C₆H₁₀O₄-O-CH₂-CH₂-COO-CH₂-CHOH-CH₂-(OC₃H₆)₀₋₁₀-, -C₃H₆-O-CH₂-CH(CH₃)-(CO)NH-C₂H₄-, -C₃H₆-S-CH₂-CH(CH₃)-(CO)NH-C₂H₄-, -C₃H₆-NH-CH₂-CH(CH₃)-(CO)NH-C₂H₄-, -C₃H₆-NH-C₂H₄-CH₂-CH(CH₃)-(CO)NH-C₂H₄-, -C₁₀H₂₀-COO-CH₂-CH(CH₃)-(CO)NH-C₂H₄-, -C₃H₆-C₆H₄(OCH₃)-O-CH₂-CH(CH₃)-(CO)NH-C₂H₄-, -C₃H₆-O-C₆H₁₀O₄-O-CH₂-CH(CH₃)-(CO)NH-C₂H₄, -C₃H₆-O-CH₂-CH(CH₃)-(CO)NH-C₃H₆-, -C₃H₆-S-CH₂-CH(CH₃)-(CO)NH-C₃H₆-, -C₃H₆-NH-CH₂-CH(CH₃)-(CO)NH-C₃H₆-, -C₃H₆-NH-C₂H₄-CH₂-CH(CH₃)-(CO)NH-C₃H₆-, -C₁₀H₂₀-COO-CH₂-CH(CH₃)-(CO)NH-C₃H₆-, -C₃H₆-C₆H₄(OCH₃)-O-CH₂-CH(CH₃)-(CO)NH-C₃H₆-, -C₃H₆-O-C₆H₁₀O₄-O-CH₂-CH(CH₃)-(CO)NH-C₃H₆-, -C₃H₆-O-CH₂-CH(CH₃)-(CO)NH-CH₂-CHOH-CH₂-, -C₃H₆-S-CH₂-CH(CH₃)-(CO)NH-CH₂-CHOH-CH₂-, -C₃H₆-NH-CH₂-CH(CH₃)-(CO)NH-CH₂-CHOH-CH₂-, -C₃H₆-NH-C₂H₄-CH₂-CH(CH₃)-(CO)NH-CH₂-CHOH-CH₂-, -C₁₀H₂₀-COO-CH₂-CH(CH₃)-(CO)NH-CH₂-CHOH-CH₂-, -C₃H₆-C₆H₄(OCH₃)-O-CH₂-CH(CH₃)-(CO)NH-CH₂-CHOH-CH₂-, -C₃H₆-O-C₆H₁₀O₄-O-CH₂-CH(CH₃)-(CO)NH-CH₂-CHOH-CH₂-, -C₃H₆-O-CH₂-CH(CH₃)-COO-C₃H₆-, -C₃H₆-S-CH₂-CH(CH₃)-COO-C₃H₆-, -C₃H₆-NH-CH₂-CH(CH₃)-COO-C₃H₆-, -C₃H₆-NH-C₂H₄-CH₂-CH(CH₃)-COO-C₃H₆-, -C₁₀H₂₀-COO-CH₂-CH(CH₃)-COO-C₃H₆-, -C₂H₄-C₆H₄(CH₃)-O-CH₂-CH(CH₃)-COO-C₃H₆-, -C₃H₆-O-C₆H₁₀O₄-O-CH₂-CH(CH₃)-COO-C₃H₆-, -C₃H₆-O-CH₂-CH(CH₃)-COO-CH₂-CHOH-CH₂-(OC₃H₆)₀₋₁₀-, -C₃H₆-S-CH₂-CH(CH₃)-COO-CH₂-CHOH-CH₂-(OC₃H₆)₀₋₁₀-, -C₃H₆-NH-CH₂-CH(CH₃)-COO-CH₂-CHOH-CH₂-(OC₃H₆)₀₋₁₀-, -C₃H₆-NH-C₂H₄-CH₂-CH(CH₃)-COO-CH₂-CHOH-CH₂-(OC₃H₆)₀₋₁₀-, -C₁₀H₂₀-COO-CH₂-CH(CH₃)-COO-CH₂-CHOH-CH₂-(OC₃H₆)₀₋₁₀-, -C₃H₆-C₆H₄(OCH₃)-O-CH₂-CH(CH₃)-COO-CH₂-CHOH-CH₂-(OC₃H₆)₀₋₁₀-, -C₃H₆-O-C₆H₁₀O₄-O-CH₂-CH(CH₃)-COO-CH₂-CHOH-CH₂-(OC₃H₆)₀₋₁₀-, -C₃H₆-O-CO-C₂H₄-NH-C₂H₄-, -C₃H₆-O-CO-C₂H₄-N(CH₃)-C₂H₄-, -C₃H₆-O-CO-C₂H₄-NH-C₃H₆-, -C₃H₆-O-CO-C₂H₄-NH-CH₂-CHOH-CH₂-, -C₃H₆-O-CO-C₂H₄-N (t-Bu) -CH₂-CHOH-CH₂-, -C₃H₆-O-CO-C₂H₄-N(C₆H₁₁)-CH₂-CHOH-CH₂-, -C₃H₆-O-CO-C₂H₄-NH-CH₂-CHOH-CH₂-, -C₃H₆-O-CO-C₂H₄-NH-CH₂-CHOH-CH₂-, -C₃H₆-O-CO-CH(CH₃)CH₂-NH-C₂H₄-, -C₃H₆-O-CO-CH(CH₃)CH₂-N(CH₃)-C₂H₄-, -C₃H₆-O-CO-CH(CH₃)CH₂-NH-C₃H₆-, -C₃H₆-O-CO-CH(CH₃)CH₂-NH-CH₂-CHOH-CH₂-, -C₃H₆-O-CO-CH(CH₃)CH₂-N(t-Bu)-CH₂-CHOH-CH₂-, -C₃H₆-O-CO-CH (CH₃)CH₂-N(C₆H₁₁)-CH₂-CHOH-CH₂-, -C₃H₆-O-CO-CH(CH₃)CH₂-NH-CH₂-CHOH-CH₂-, -C₃H₆-O-CO-CH(CH₃)CH₂-NH-CH₂-CHOH-CH₂-, -C₃H₆-O-C₂H₄-SO₂-C₆H₄-, -C₃H₆-O-(C₂H₄O)₁₀-C₂H₄-SO₂-C₆H₄-, -C₃H₆-O-C₆H₁₀O₄-O-C₂H₄-SO₂-C₆H₄-, -C₃H₆-C₆H₄(OCH₃)-C₂H₄-SO₂-C₆H₄-, -C₃H₆-S-C₂H₄-SO₂-C₆H₄-, -C₃H₆-NH-C₂H₄-SO₂-C₆H₄-, -C₃H₆-NH-C₂H₄-NH-C₂H₄-SO₂-C₆H₄-, -C₁₀H₂₀-COO-C₂H₄-SO₂-C₆H₄-, -C₃H₆-O-C₂H₄-SO₂-C₃H₆-(OC₂H₄)₀₋₁₀-, -C₃H₆-O-(C₂H₄O)₁₀-C₂H₄-SO₂-C₃H₆-(OC₂H₄)₀₋₁₀-, -C₃H₆-O-C₆H₁₀O₄-O-C₂H₄-SO₂-C₃H₆-(OC₂H₄)₀₋₁₀-, -C₃H₆-C₆H₄(OCH₃)-C₂H₄-SO₂-C₃H₆-(OC₂H₄)₀₋₁₀-, -C₃H₆-S-C₂H₄-SO₂-C₃H₆-(OC₂H₄)₀₋₁₀-, -C₃H₆-NH-C₂H₄-SO₂-C₃H₆-(OC₂H₄)₀₋₁₀-, -C₃H₆-NH-C₂H₄-NH-C₂H₄-SO₂-C₃H₆-(OC₂H₄)₀₋₁₀-, -C₁₀H₂₀-COO-C₂H₄-SO₂-C₃H₆-(OC₂H₄)₀₋₁₀-,
gegebenenfalls substituierte Triazinylenreste, wie z.B. mit I-minopropyl-, Iminoethylaminopropyl-, Oxypropyl-, Mercaptopropyl-, O-Carboxydecyl- und Glycosidoxy-propylrest substituierte Triazinylenreste und 6-ONa-Triazinyl-2,4-enrest, wobei Iminopropyl-, Iminoethylaminopropyl-, Oxypropyl-, Mercaptopropyl- und O-Carboxydecylrest substituierte Triazinylenreste bevorzugt sind.

Die erfindungsgemäßen Organosiliciumverbindungen besitzen vorzugsweise ein mittleres Molekulargewicht M_{w} von mindestens 1000 g/mol, besonders bevorzugt 2000 bis 50000 g/mol.

Die erfindungsgemäßen Organosiliciumverbindungen sind bei Raumtemperatur, also bei 20°C, bevorzugt flüssig, wachsartig oder fest.

Die erfindungsgemäß hergestellten Organopolysiloxane weisen bei Raumtemperatur, also bei 20°C, eine viskosität von vorzugsweise 200 bis 100000 mm²/s, besonders bevorzugt 500 bis 20000 mm²/s, auf.

Falls es sich bei den erfindungsgemäßen Cyclodextrinreste aufweisenden Organosiliciumverbindungen um Organosiloxane handelt, sind solche der Formel

A_{f}R_{3-f}SiO(SiR₂O)_{g}(SiRAO)ₕSiR_{3-f}A_{f} (III)

bevorzugt, wobei A und R die oben dafür angegebene Bedeutung haben, f 0 oder 1 ist, g und h jeweils unabhängig voneinander 0 oder eine ganze Zahl von 1 bis 500 sind, mit der Maßgabe, dass mindestens ein Rest A je Molekül enthalten ist und die g Einheiten (SiR₂O) und die h Einheiten (SiRAO) beliebig im Molekül verteilt sein können.

Weitere Beispiele sind außer den Organopolysiloxanen der Formel (III) die entsprechenden cyclischen Verbindungen sowie Mischungen aus den Cyclen und den linearen Verbindungen.

Beispiele für Cyclodextrinreste aufweisende Organosiliciumverbindungen sind 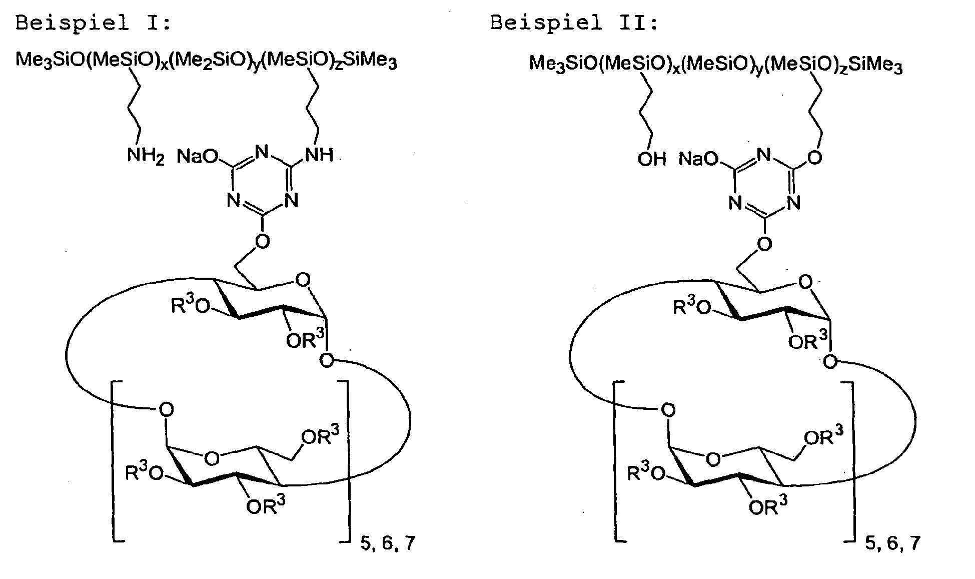 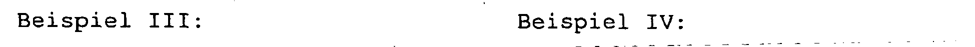 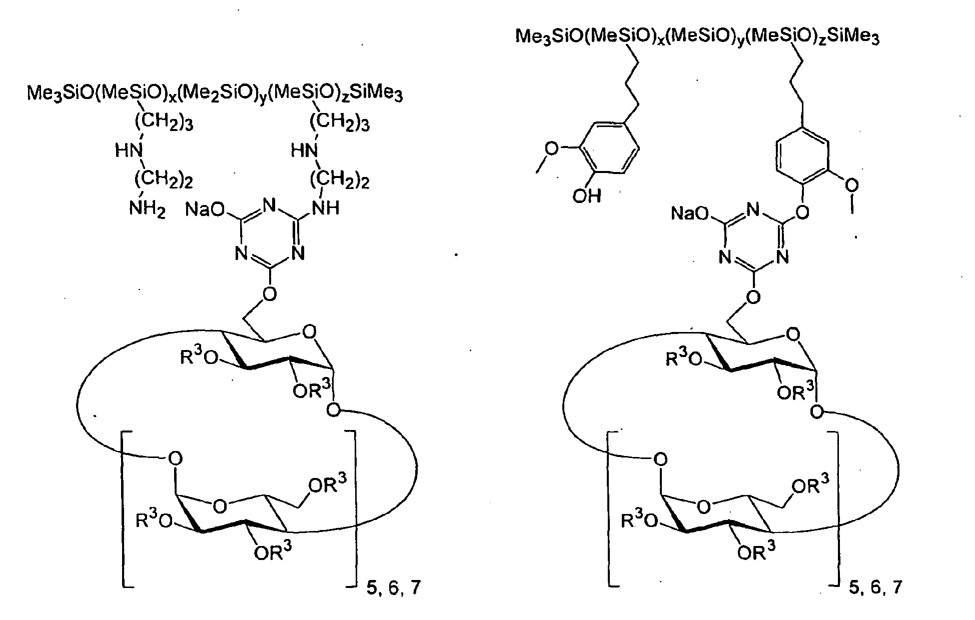 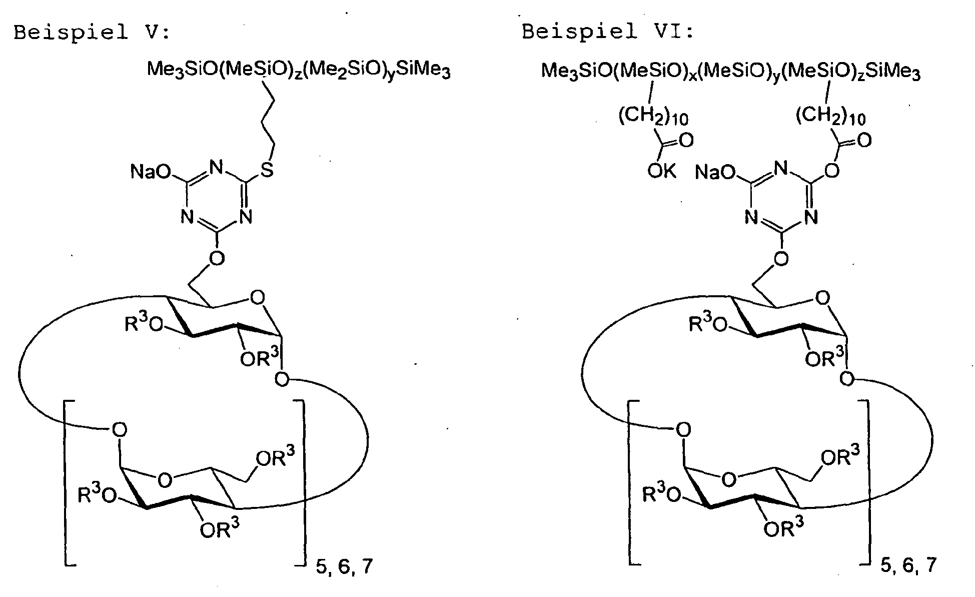 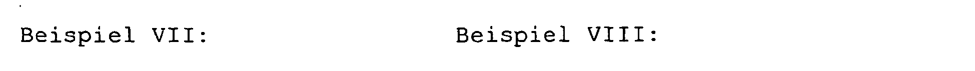 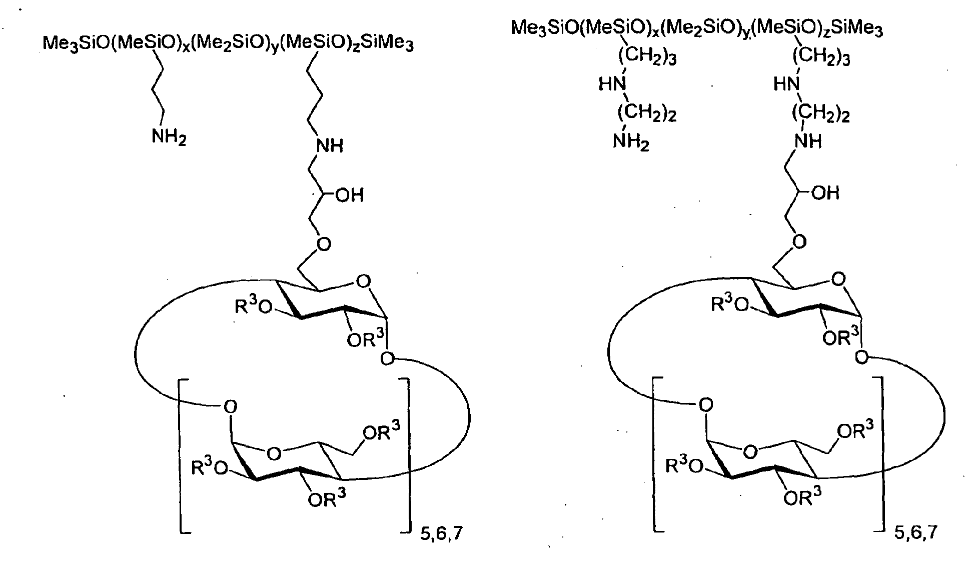 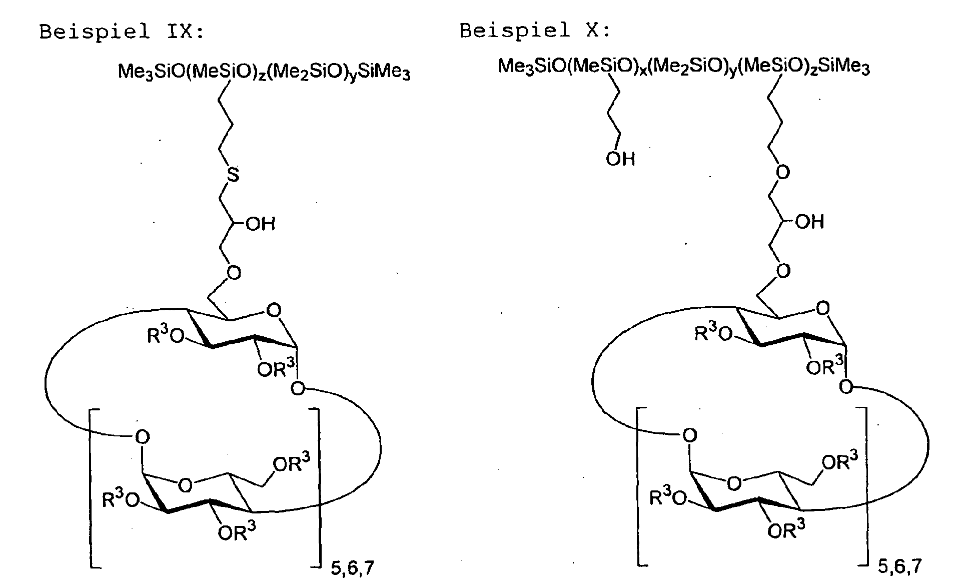 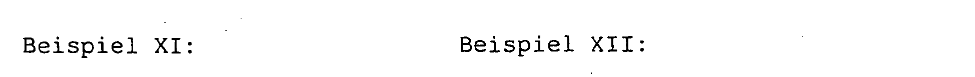 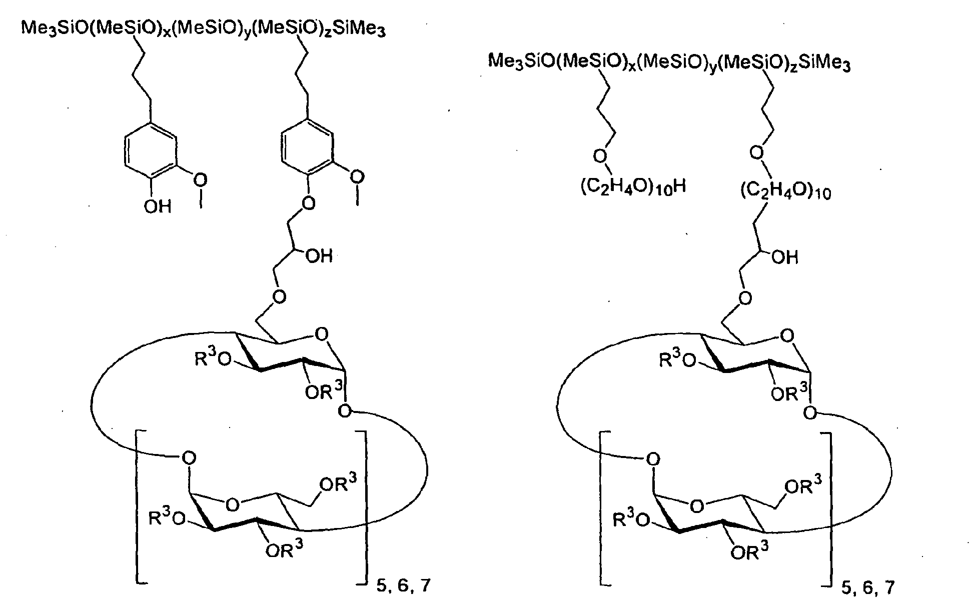 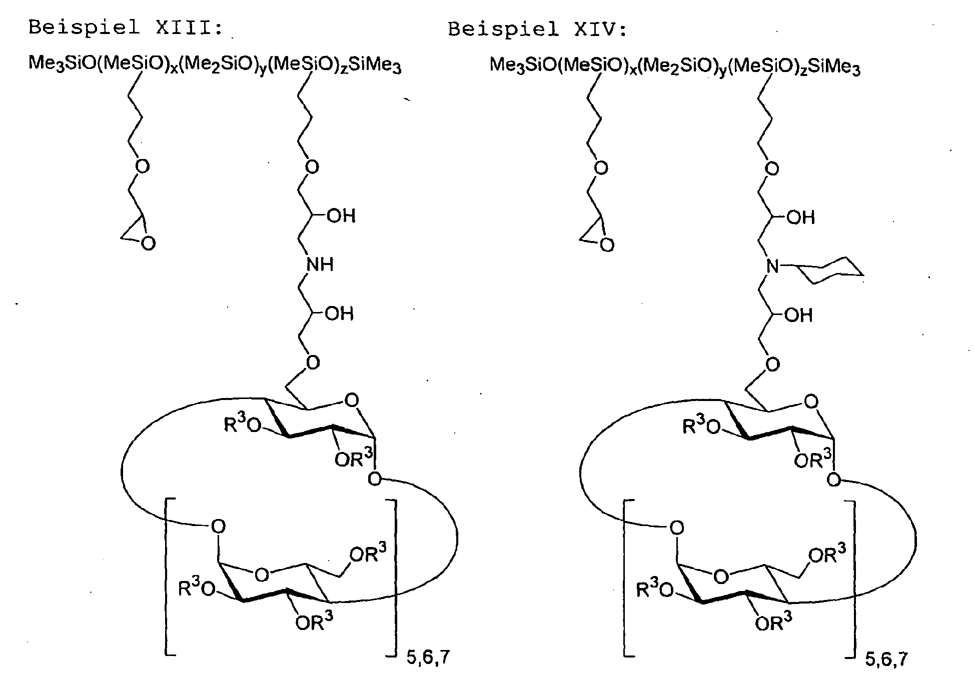 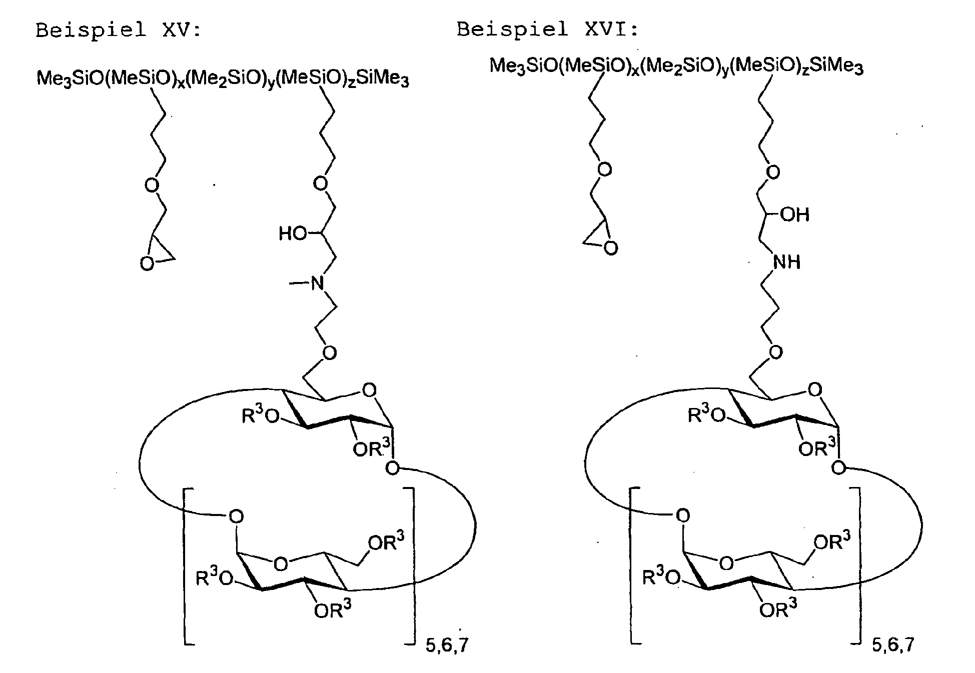 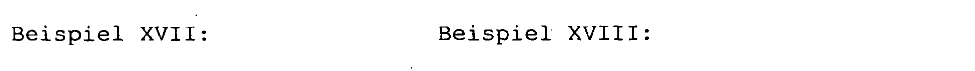 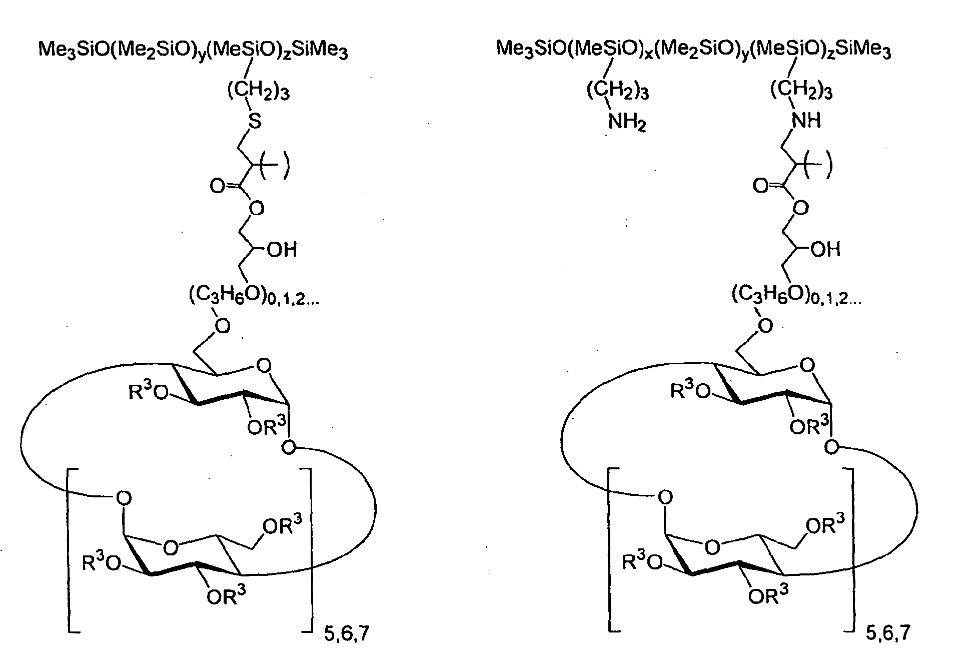 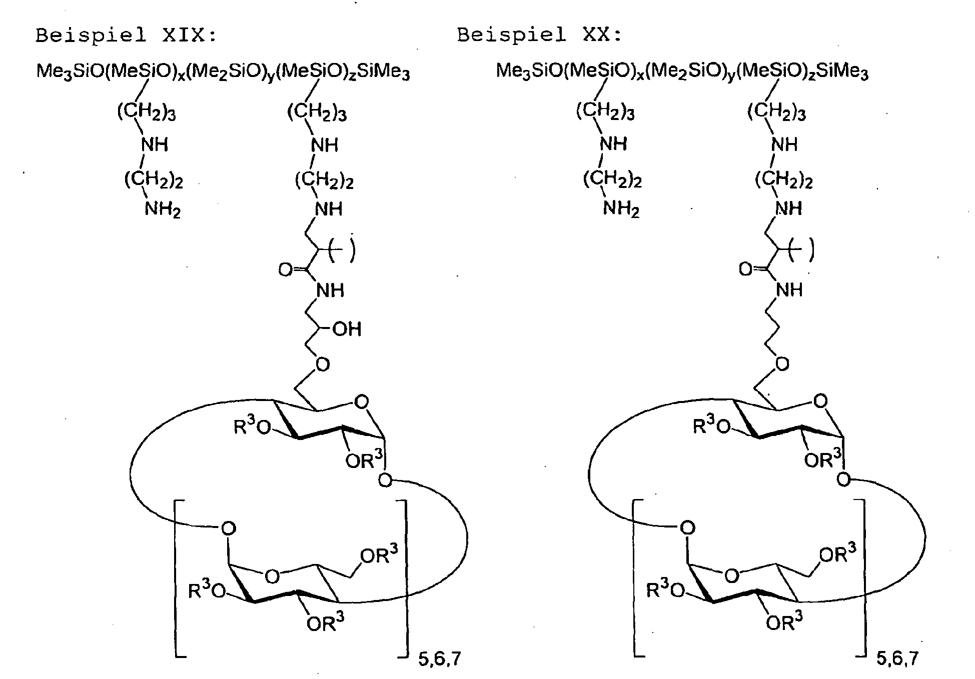 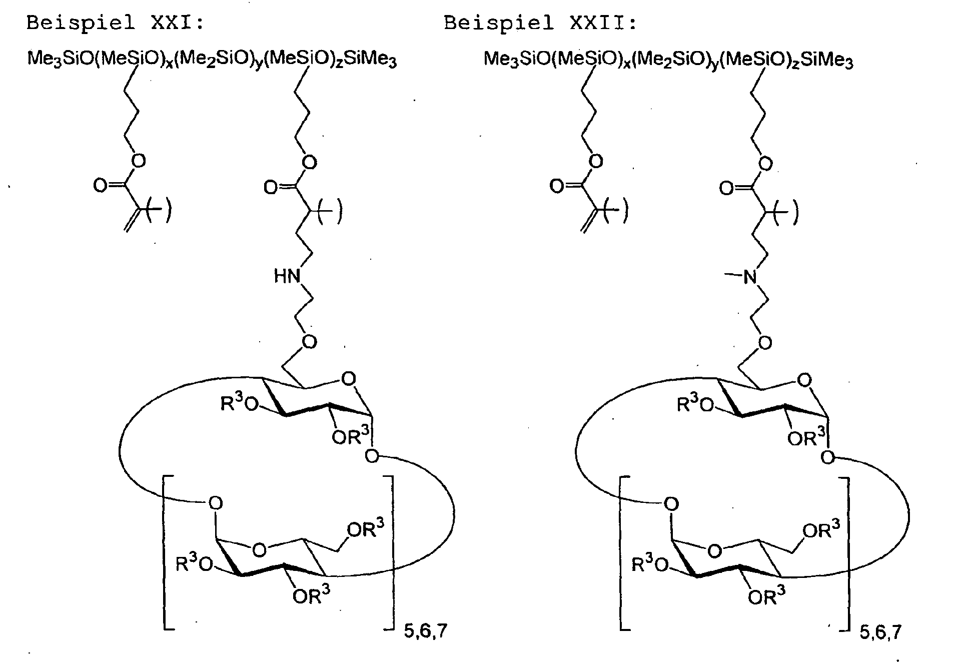 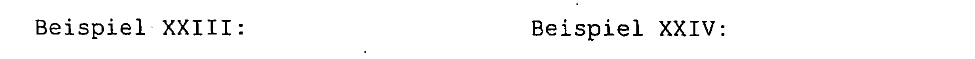 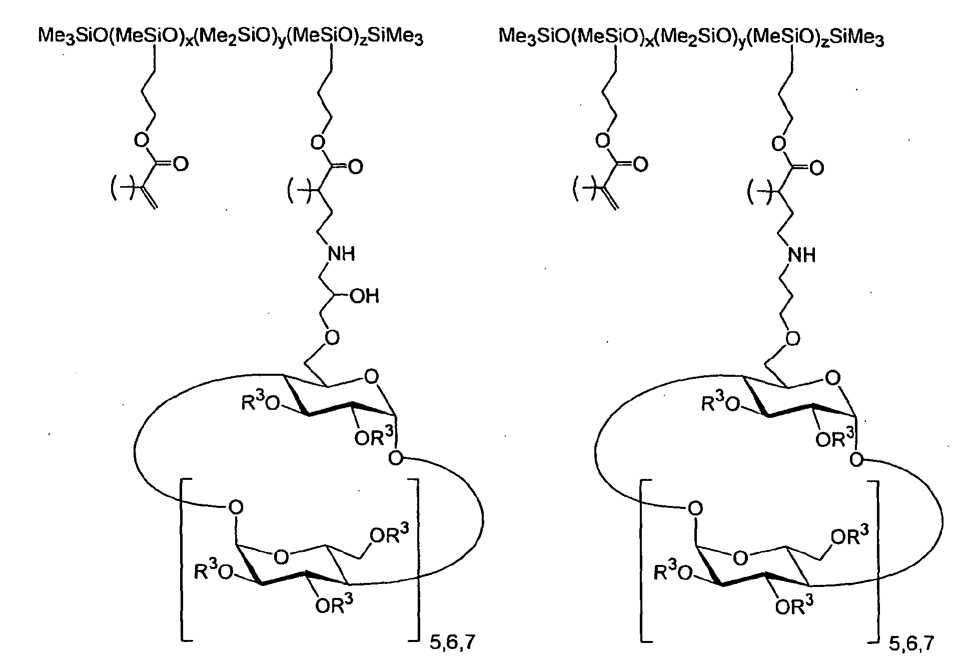 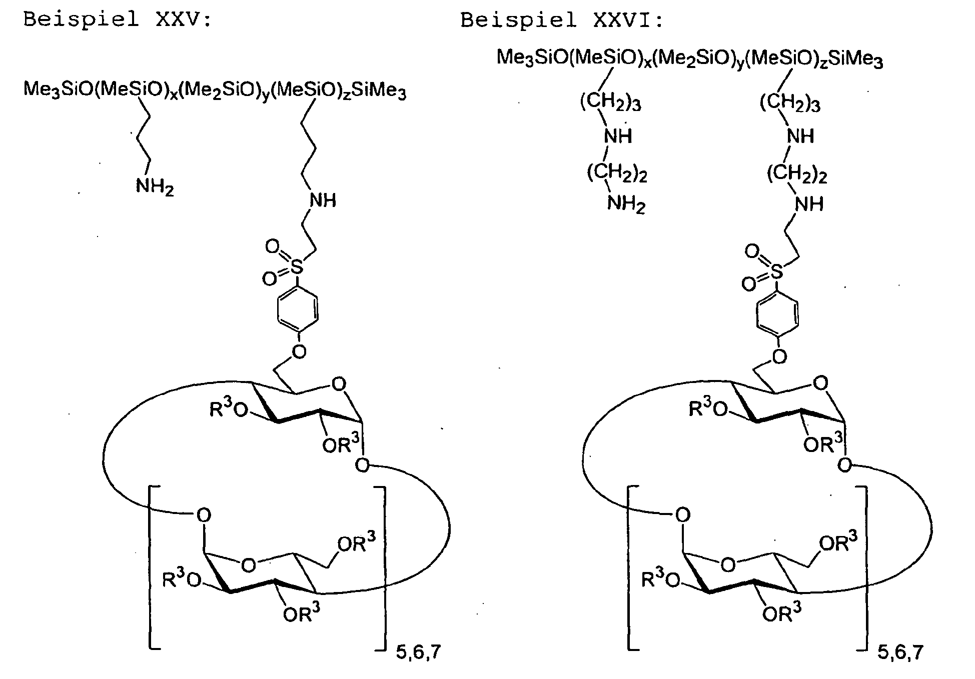 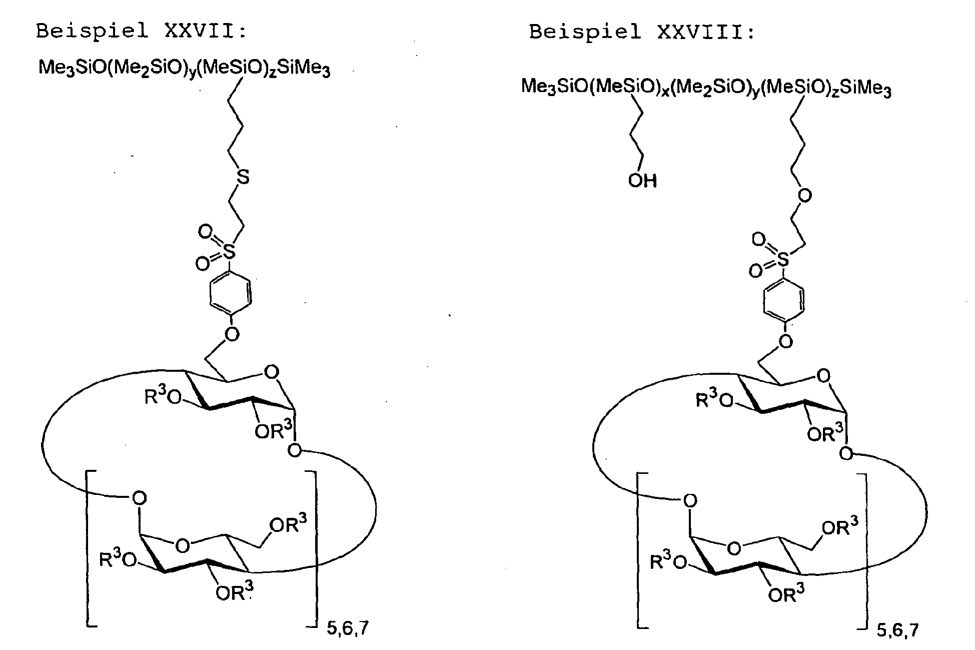 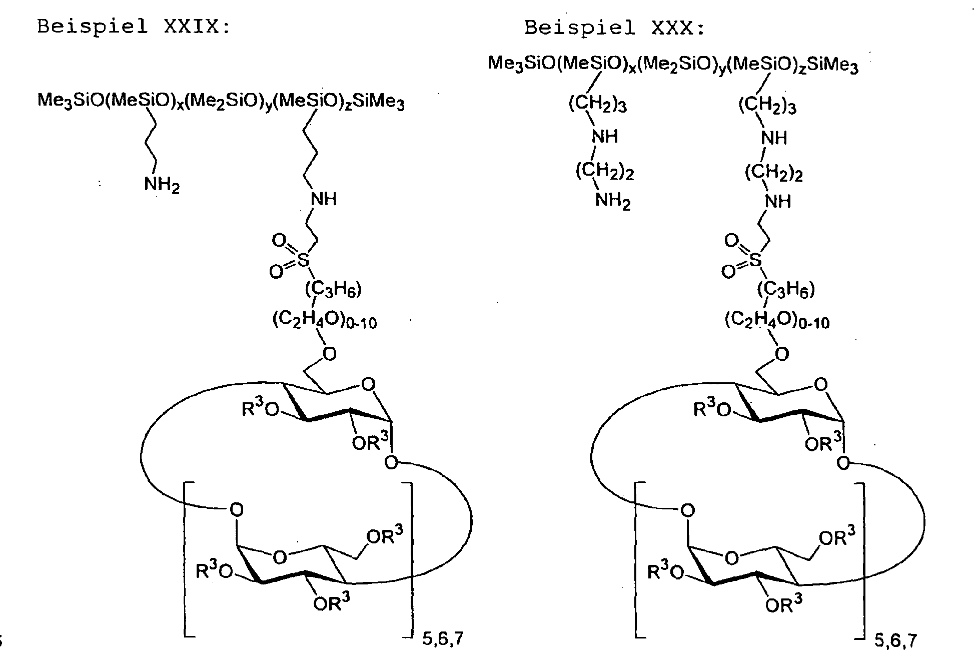 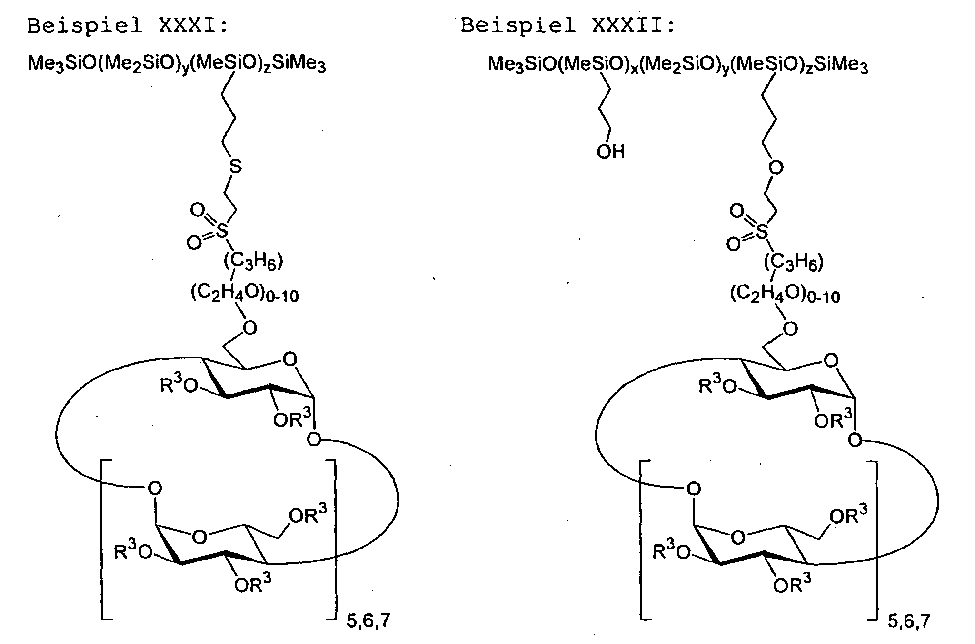 wobei Me für Methylrest steht, R³ gleich oder verschieden sein kann und die obengenannte Bedeutung hat, x eine ganze Zahl zwischen 0 und 10 ist, y eine ganze Zahl von 1 bis 500 ist und z eine ganze Zahl zwischen 0 und 10 ist.

Die erfindungsgemäßen Cyclodextrinreste aufweisenden Organosiliciumverbindungen können nach beliebigen Verfahren hergestellt werden, wie etwa durch a) Kondensationsreaktion, b) nucleophile Substitution, z.B. von monochlortriazinfunktionellem Cyclodextrin(derivat) mit Hydroxy-, Mercapto-, Amino- oder Carboxylgruppen aufweisender Organosiliciumverbindung, durch c) Epoxidring-Öffnungsreaktionen, wie z.B. von aminofunktionellem Cyclodextrin(derivat) mit epoxyfunktioneller Organosiliciumverbindung bzw. epoxyfuntionellem Cyclodextrin(derivat) mit hydroxy-, mercapto- oder aminofunktioneller Organosiliciumverbindung oder d) durch Michael-ähnliche Additionsreaktionen, wie z.B. von aminofunktionellem Cyclodextrin(derivat) mit (meth)acrylfunktioneller Organosiliciumverbindung bzw. von hydroxy-, mercapto- oder aminofunktioneller Organosiliciumverbindung mit (meth)-acrylsäure- und vinylsulfonsäure(derivat)-funktionellem Cyclodextrin(derivat).

Die erfindungsgemäßen Organosiliciumverbindungen können jeweils abhängig von den funktionellen Gruppen der Reaktanden auf verschiedene Art und Weise hergestellt werden.

Ein weiterer Gegenstand der vorliegenden Erfindung ist ein Verfahren (Verfahren 1) zur Herstellung der erfindungsgemäßen Organosiliciumverbindungen, dadurch gekennzeichnet, dass halogentriazinfunktionelles Cyclodextrin(derivat) mit Amino-, Mercapto-, Hydroxy-, Carboxy-, Anhydrid-, Glycosido-, Phenol-, Polyglycol-, Phosphonato- oder Silalactongruppen aufweisender Organosiliciumverbindung umgesetzt wird.

Bei den erfindungsgemäß eingesetzten Organosiliciumverbindungen kann es sich um beliebige Amino-, Mercapto-, Hydroxy-, Carboxy-, Anhydrid-, Glycosido-, Phenol-, Polyglycol-, Phosphonato- oder Silalactongruppen aufweisende Organosiliciumverbindungen handeln.

Vorzugsweise handelt es sich bei den im erfindungsgemäßen Verfahren 1 eingesetzten Organosiliciumverbindungen um solche aus Einheiten der Formel

A¹_{a¹}R_{b}X_{c}H_{d}SiO_{(4-a¹-b-c-d)/2} (I¹),

worin
R, X, b, c und d eine der oben dafür angegebenen Bedeutung haben, A¹ gleich oder verschieden sein kann und einen Amino-, Mercapto-, Hydroxy-, Carboxy-, Anhydrid-, Glycosido-, Phenol-, Polyglycol-, Phosphonato- oder Silalactonrest bedeutet und a¹ eine für a angegebene Bedeutung hat, mit der Maßgabe, dass die Summe a¹+b+c+d ≤ 3 ist und die Organosiliciumverbindung pro Molekül mindestens einen Rest A¹ aufweist.

Bevorzugt handelt es sich bei Rest A¹ um mit Mercapto- oder Hydroxygruppen substituierte Kohlenwasserstoffreste und deren Derivate, wie Mercaptopropyl- und Hydroxypropylrest, mit Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest, besonders bevorzugt sind.

Bei den bevorzugten und besonders bevorzugten Spezies der erfindungsgemäß eingesetzten Organosiliciumverbindungen aus Einheiten der Formel (I¹) handelt es sich selbstverständlich um analoge Strukturen wie oben bereits im Zusammenhang mit den erfindungsgemäßen Organosiliciumverbindungen beschrieben.

Die erfindungsgemäß eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem erfindungsgemäß eingesetzten halogentriazinfunktionellen Cyclodextrin(derivat) kann es sich um ein beliebiges auch bisher bekanntes Cyclodextrin(derivat), das über eine oder mehrere, gleiche oder verschiedene reaktive Halogentriazingruppen verfügt, handeln.

Beispiele für die erfindungsgemäß eingesetzten halogentriazinfunktionellen Cyclodextrin(derivat)e sind solche der allgemeinen Formel 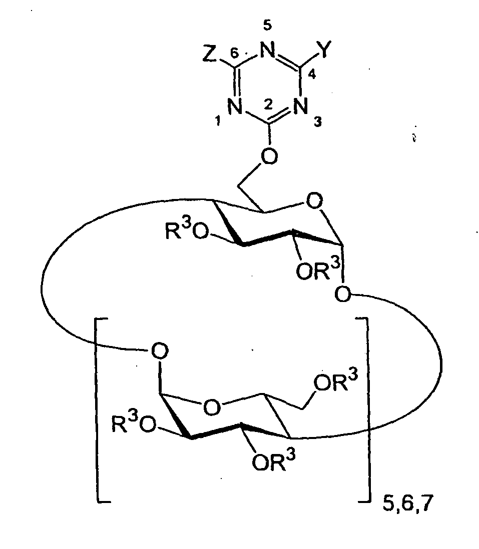 worin
R³ gleich oder verschieden sein kann und eine oben dafür angegebene Bedeutung hat,
Y und Z gleich oder verschieden sein können und Halogenatom, Reste -OR mit R gleich der obengenannten Bedeutung, -OH oder -ONa bedeuten, mit der Maßgabe, dass mindestens einer der Reste Y oder Z die Bedeutung von Halogenatom haben muß.

Bei den erfindungsgemäß eingesetzten halogentriazinfunktionellen Cyclodextrin(derivat)en sind solche bevorzugt, welche in 4-und 6-Position des Halogentriazinringes Fluor- oder Chlorsubstituenten sowie höchstens eine OH- oder ONa-Gruppe tragen. Besonders bevorzugt ist das (4-Chlor-6-ONa-Triazinyl)-Cyclodextrin(derivat).

Die erfindungsgemäß eingesetzten halogentriazinfunktionellen Cyclodextrin(derivat)e sind handelsübliche Produkte bzw. nach in der Chemie gängigen Verfahren herstellbar.

Bei dem erfindungsgemäßen Verfahren 1 wird halogentriazinfunktionelles Cyclodextrin(derivat) in Mengen von bevorzugt 0,1 bis 90 Gewichtsprozent, besonders bevorzugt 0,1 bis 50 Gewichtsprozent, insbesondere 1 bis 30 Gewichtsprozent, jeweils bezogen auf das Gesamtgewicht der erfindungsgemäß eingesetzten Amino-, Mercapto-, Hydroxy-, Carboxy-, Anhydrid-, Glycosido-, Phenol-, Polyglycol-, Phosphonato- oder Silalactongruppen aufweisender Organosiliciumverbindung, eingesetzt, wobei die molare Cyclodxtrinmenge maximal 95 mol-% der oben beschriebenen funktionellen Gruppen in der erfindungsgemäß eingesetzten Organosiliciumverbindung betragen darf.

Das erfindungsgemäße Verfahren 1 kann mit oder ohne Katalyse erfolgen, wobei die basische Katalyse bevorzugt ist.

Als gegebenenfalls eingesetzter Katalysator eignen sich alle bekannten Verbindungen, welche die Nucleophilie der Gruppe A¹ der erfindungsgemäß eingesetzten Organosiliciumverbindungen durch Deprotonierung erhöhen. Beispiele für solche Katalysatoren sind Benzyltrimethylammoniumhydroxid, Tetramethylammoniumhydroxid, Alkalihydroxid und Erdalkalihydroxid, Alkalialkoholate und Alkaliamide, wobei Alkalihydroxide bevorzugt sind.

Falls bei dem erfindungsgemäßen Verfahren 1 Katalysatoren eingesetzt werden, handelt es sich um Mengen von bevorzugt 0,001 bis 1 Mol, bezogen auf ein Mol reaktiver Gruppe A¹ der erfindungsgemäß eingesetzten Organosiliciumverbindung aus Einheiten der Formel (I¹).

Ein weiteres Verfahren (Verfahren 2) zur Herstellung der Organosiliciumverbindungen, besteht darin, dass epoxyfuntionelles Cyclodextrin(derivat) mit Amino-, Mercapto-, Carboxy-, Anhydrid-, Hydroxy-, Glycosido-, Phenol-, Polyglycol-, Phosphonato- oder Silalactongruppen aufweisender Organosiliciumverbindung umgesetzt wird.

Bei den eingesetzten Organosiliciumverbindungen kann es sich um beliebige Amino-, Mercapto-, Carboxy-, Anhydrid-, Hydroxy-, Glycosido-, Phenol-, Polyglycol-, Phosphonato- oder Silalactongruppen aufweisende Organosiliciumverbindungen handeln.

Vorzugsweise handelt es sich bei den im Verfahren 2 eingesetzten Organosiliciumverbindungen um solche aus Einheiten der Formel

A²_{a²}2R_{b}X_{c}H_{d}SiO_{(4-a²-b-c-d)/2} (I²),

worin
R, X, b, c und d die oben dafür angegebene Bedeutung haben, A² gleich oder verschieden sein kann und einen Amino-, Mercapto-, Carboxy-, Anhydrid-, Hydroxy-, Glycosido-, Phenol-, Polyglycol-, Phosphonato- oder Silalactongruppen bedeutet und a² eine für a angegebene Bedeutung hat, mit der Maßgabe, dass die Summe a²+b+c+d ≤ 4 ist und die Organosiliciumverbindung pro Molekül mindestens einen Rest A² aufweist.

Bevorzugt handelt es sich bei Rest A² um mit Mercapto- oder Hydroxygruppen substituierte Kohlenwasserstoffreste und deren Derivate, wie Mercaptopropyl- und 3-Hydroxy-3-methyl-butylrest, Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der eingesetzten Organosiliciumverbindungen aus Einheiten der Formel (I²) handelt es sich selbstverständlich um analoge Strukturen wie oben bereits im Zusammenhang mit den Organosiliciumverbindungen beschrieben.

Die eingesetzten Amino-, Mercapto-, Carboxy-, Anhydrid-, Hydroxy-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten epoxyfunktionellen Cyclodextrin(derivat) kann es sich um ein beliebiges auch bisher bekanntes Cyclodextrin(derivat), das über eine oder mehrere, gleiche oder verschiedene epoxyfunktionelle Gruppen verfügt, handeln.

Beispiele für die eingesetzten epoxyfunktionellen Cyclodextrin(derivat)e sind Glycidoxypropyl-Cyclodextrin, 4,5-Epoxypentyl-Cyclodextrin, 6,7-Epoxyheptyl-Cyclodextrin und 8,10-Epoxyundecyl-Cyclodextrin, wobei das Glycidoxypropyl-Cyclodextrin bevorzugt ist.

Die eingesetzten epoxyfunktionellen Cyclodextrin(derivat)e sind handelsübliche Produkte bzw. nach in der Chemie gängigen Verfahren herstellbar.

Bei dem Verfahren 2 wird epoxyfunktionelles Cyclodextrin(derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgewicht der eingesetzten Amino-, Mercapto-, Carboxy-, Anhydrid-, Hydroxy-, Glycosido-, Phenol-, Polyglycol-, Phosphonato- oder Silalactongruppen aufweisenden Organosiliciumverbindung, eingesetzt, wobei die molare Cyclodxtrinmenge maximal 95 mol-% der oben beschriebenen funktionellen Gruppen in der eingesetzten Organosiliciumverbindung betragen darf.

Das Verfahren 2 kann mit oder ohne Katalyse erfolgen, wobei mit Katalyse bevorzugt ist.

Als gegebenenfalls eingesetzter Katalysator eignen sich alle bekannten Verbindungen, die Epoxidring-Öffnungsreaktionen katalysieren, wie z.B. Bronsted-Säuren, wie Phosphorsäure, Schwefelsäure, Salzsäure, Eisessig und Ameisensäure, Lewis-Säuren, wie Litiumperchlorat, Zinktetrafluoroborat, Eisen(II)chlorid und Zinn(IV)chlorid, Brønsted-Basen, wie z.B. Natriummethylat und Alkaliamide, sowie Ammoniumchlorid, Tetraalkylammoniumbromide und Alkaliiodide.

Falls bei dem Verfahren Katalysatoren eingesetzt werden, handelt es sich um Mengen um bevorzugt 0,0001 bis 1 Mol, insbesondere 0,001 bis 0,5 Mol, jeweils bezogen auf ein Mol Epoxidgruppe des eingesetzten epoxyfunktionellen Cyclodextrin(derivat)s verwendet.

Ein weiteres Verfahren **(Verfahren 3)** zur Herstellung der Organosiliciumverbindungen, besteht darin dass aminofuntionelles Cyclodextrin(derivat) mit epoxyfunktionellem Polysiloxan umgesetzt wird.

Bei den eingesetzten Organosiliciumverbindungen kann es sich um beliebige Epoxygruppen aufweisende Organosiliciumverbindungen handeln.

Vorzugsweise handelt es sich bei den im Verfahren 3 eingesetzten Organosiliciumverbindungen um solche aus Einheiten der Formel

A³_{a³}R_{b}X_{c}H_{d}SiO_{(4-a³-b-c-d)/2} (I³),

worin
R, X, b, c und d die oben dafür angegebene Bedeutung haben, A³ einen epoxyfunktionellen Rest bedeutet und a³ eine für a angegebene Bedeutung hat, mit der Maßgabe, dass die Summe a³+b+c+d ≤ 4 ist und die Organosiliciumverbindung pro Molekül mindestens einen Rest A³ aufweist.

Bevorzugt handelt es sich bei Rest A³ um epoxyfunktionelle Reste mit 1 bis 18 Kohlenstoffatomen, wobei der 3-Glycidoxypropylrest besonders bevozugt ist.

Bei den bevorzugten und besonders bevorzugten Spezies der eingesetzten Organosiliciumverbindungen aus Einheiten der Formel (I³) handelt es sich selbstverständlich um analoge Strukturen wie oben bereits im Zusammenhang mit den Organosiliciumverbindungen beschrieben.

Die eingesetzten epoxyfunktionellen Organosiliciumverbindungen sind handelsübliche Produkte bzw. nach in der Siliciumchemie gängigen Verfahren herstellbar.

Bei dem eingesetzten aminofunktionellen Cyclodextrin(derivat) kann es sich um ein beliebiges auch bisher bekanntes Cyclodextrin(derivat), das über eine oder mehrere, gleiche oder verschiedene mit Aminogruppen und deren Derivate substituierte Kohlenwasserstoffreste, wie z.B. den β-Aminoethyl-, β-(N-Methyl)aminoethyl-, β-(N-Ethyl)aminoethyl-, γ-Aminopropyl-, γ-Amino-2-hydroxy-propyl-, γ-(N-Methyl)amino-2-hydroxy-propyl-, γ-(N-Ethyl)amino-2-hydroxy-propyl-, γ-(N-tert.-Butyl)amino-2-hydroxy-propyl-, γ-(N-Cyclohexyl)amino-2-hydroxypropyl-, 3-(y-Amino-2-hydroxy-propyloxy-)propyl- und 3-{γ-(N-Ethyl)amino-2-hydroxy-propyloxy-}propyl-rest, verfügt, handeln.

Bevorzugt handelt es sich bei dem mit Aminogruppen und deren Derivate substituierten Kohlenwasserstoffrest, welche das erfingsgemäß eingesetzte Cyclodextrin(derivat) aufweist, um den γ-Aminoethyl-, β-(N-Methyl)aminoethyl-, γ-Aminopropyl-, γ-(N-tert.-Butyl)amino-2-hydroxy-propyl- und γ-(N-Cyclohexyl)amino-2-hydroxy-propyl-rest.

Die eingesetzten aminofunktionellen Cyclodextrin(derivat)e sind handelsübliche Produkte bzw. nach in der Chemie gängigen Verfahren herstellbar.

Bei dem Verfahren 3 wird aminofunktionelles Cyclodextrin(derivat) in Mengen von bevorzugt 0,1 bis 90, besonders bevorzugt 1 bis 50, insbesondere 1 bis 30 Gewichtsprozent, jeweils bezogen auf das Gesamtgewicht der eingesetzten Epoxygruppen aufweisenden Organosiliciumverbindung, eingesetzt, wobei die molare Cyclodxtrinmenge maximal 95 mol-% der epoxyfunktionellen Gruppen in der eingesetzten Organosiliciumverbindung betragen darf.

Das Verfahren 3 kann mit oder ohne Katalyse erfolgen, wobei mit Katalyse bevorzugt ist.

Als Katalysator eignen sich alle bekannten Verbindungen, die Epoxidring-Öffnungsreaktionen katalysieren, wie z.B. Brønsted-Säuren, wie Phosphorsäure, Schwefelsäure, Salzsäure, Eisessig und Ameisensäure, Lewis-Säuren, wie Litiumperchlorat, Zinktetrafluoroborat, Eisen(II)chlorid und Zinn(IV)chlorid, Bronsted-Basen, wie z.B. Natriummethylat und Alkaliamide, sowie Ammoniumchlorid, Tetraalkylammoniumbromide und Alkaliiodide.

Falls bei dem Verfahren 3 Katalysatoren eingesetzt werden, handelt es sich um Mengen von bevorzugt 0,0001 bis 1 Mol, insbesondere 0,001 bis 0,5 Mol, jeweils bezogen auf ein Mol Epoxidgruppe des eingesetzten Organopolysiloxans verwendet.

Ein weiteres Verfahren **(Verfahren 4)** zur Herstellung der Organosiliciumverbindungen, besteht darin, dass ein vinylsulfonylfunktionelles Cyclodextrin(derivat) oder ein Cyclodextrin(derivat), welches über vinylsulfonylderivat-Funktionen, wie 2-Sulfooxyethyl-sulfonyl- und 2-Chlorethyl-sulfonylgruppen verfügt, mit Amino-, Mercapto-, Hydroxy-, Carboxy-, Anhydrid-, Glycosido-, Phenol-, Polyglycol-, Phosphonato- oder Silalactongruppen aufweisender Organosiliciumverbindung umgesetzt wird.

Bei den eingesetzten Organosiliciumverbindungen kann es sich um beliebige Amino-, Mercapto-, Hydroxy-, Carboxy-, Anhydrid-, Glycosido-, Phenol-, Polyglycol-, Phosphonato- oder Silalactongruppen aufweisende Organosiliciumverbindungen handeln.

Vorzugsweise handelt es sich bei den im Verfahren 4 eingesetzten Organosiliciumverbindungen um solche aus Einheiten der Formel

A⁴_{a⁴}R_{b}X_{c}H_{d}SiO_{(4-a⁴-b-c-d)/2} (I⁴),

worin
R, X, b, c und d die oben dafür angegebene Bedeutung haben, A⁴ gleich oder verschieden sein kann und einen Amino-, Mercapto-, Hydroxy -, Carboxy-, Anhydrid-, Glycosido-, Phenol-, Polyglycol-, Phosphonato- oder Silalactonrest bedeutet und a⁴ eine für a angegebene Bedeutung hat, mit der Maßgabe, dass die Summe a⁴+b+c+d ≤ 4 ist und die Organosiliciumverbindung pro Molekül mindestens einen Rest A⁴ aufweist.

Bevorzugt handelt es sich bei Rest A⁴ um mit Mercapto- oder Hydroxygruppen substituierte Kohlenwasserstoffreste und deren Derivate, wie Mercaptopropyl- und Hydroxypropylrest, Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest, mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der eingesetzten Organosiliciumverbindungen aus Einheiten der Formel (I⁴) handelt es sich selbstverständlich um analoge Strukturen wie oben bereits im Zusammenhang mit den Organosiliciumverbindungen beschrieben.

Die eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten vinylsulfonylfunktionellen Cyclodextrin(derivat) bzw. Cyclodextrin(derivat), welches über vinylsulfonylderivat-Funktionen, wie 2-Sulfooxyethyl-sulfonyl- und 2-Chlorethyl-sulfonylgruppen verfügt, kann es sich um ein beliebiges auch bisher bekanntes Cyclodextrin(derivat), das über eine oder mehrere, gleiche oder verschiedene reaktive Vinylsulfonylgruppen oder Vinylsulfonylgruppen-Derivate, wie 2-Sulfooxyethyl-sulfonyl- und 2-Chlorethylsulfonylgruppen, verfügt, handeln.

Beispiele für die eingesetzten vinylsulfonylfunktionellen bzw. 2-Sulfooxyethyl-sulfonyl- oder 2-Chlorethyl-sulfonyl-funktionellen Cyclodextrin(derivat)e sind solche der allgemeinen Formel 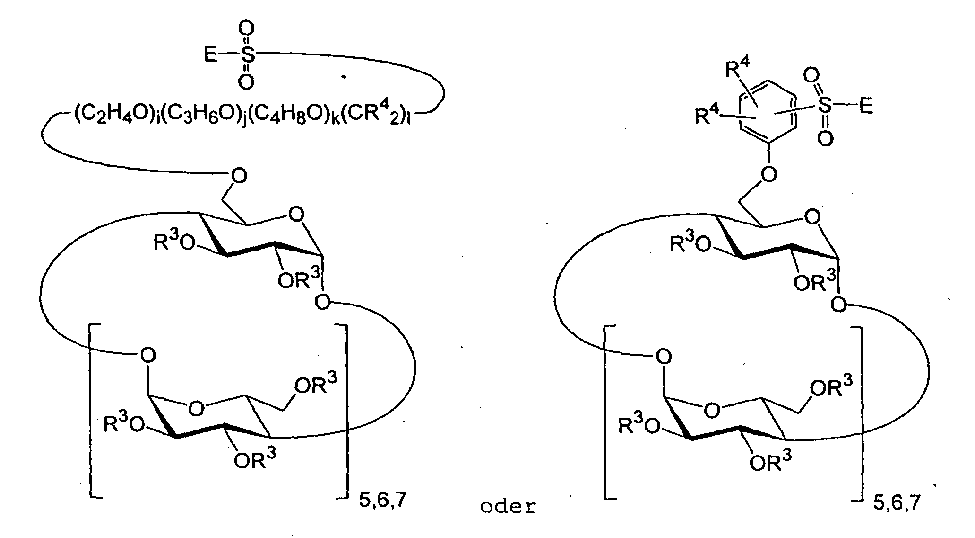 worin
R³ gleich oder verschieden sein kann und eine der oben dafür angegebenen Bedeutungen hat,
R⁴ gleich oder verschieden sein kann und Wasserstoffatom oder eine oben für R angegebene Bedeutung hat,
E -CH=CH₂, -C₂H₄-OSO₃H oder -C₂H₄-Cl ist,
i, j und k gleich oder verschieden sein können und 0 oder eine ganze Zahl von 1 bis 100, bevorzugt 0 oder eine ganze Zahl von 1 bis 20, bedeuten und
1 0 oder eine ganze Zahl von 1 bis 35, bevorzugt 0 oder eine ganze Zahl von 1 bis 12, ist.

Bevorzugt handelt es sich bei den eingesetzten vinylsulfonylfunktionellen bzw. 2-Sulfooxyethyl-sulfonyl- oder 2-Chlorethyl-sulfonyl-funktionellen Cyclodextrin(derivat)en um 3-(Vinylsulfonyl)-propyloxy-Cyclodextrin, Vinylsulfonoyl-Cyclodextrin, (2-Sulfooxyethyl)sulfonoyl-Cyclodextrin, (2-Chloroethyl)sulfonoyl-Cyclodextrin, p-Vinylsulfonyl-phenoxy-Cyclodextrin und *p*-(2-Sulfooxyethyl)sulfonyl-phenoxy-Cyclodextrin, sowie um polypropoxylierte Cyclodextrine, welche in ω-Position der Polyethergruppe eine Vinyl-sulfonoyl-, (2-Sulfooxyethyl)-sulfonoyl- oder (2-Chloroethyl)sulfonoyl-Gruppe tragen.

Die eingesetzten vinylsulfonylfunktionellen bzw. 2-Sulfooxyethyl-sulfonyl- oder 2-Chlorethyl-sulfonyl-funktionellen Cyclodextrin(derivat)e aminofunktionellen Cyclodextrin(derivat)e sind handelsübliche Produkte bzw. nach in der Chemie gängigen Verfahren herstellbar.

Bei dem Verfahren 4 wird eingesetztes vinylsulfonylfunktionelles bzw. 2-Sulfooxyethyl-sulfonyl- oder 2-Chlorethyl-sulfonyl-funktionelles Cyclodextrin(derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgewicht der eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindung, eingesetzt, wobei die molare Cyclodxtrinmenge maximal 95 mol-% der epoxyfunktionellen Gruppen in der eingesetzten Organosiliciumverbindung betragen darf.

Das Verfahren 4 kann mit oder ohne Katalyse erfolgen, wobei als Katalysator alle bekannten Verbindungen, die Michael-ähnliche Additionsreaktionen katalysieren, eingesetzt werden können.

Bevorzugt wird das Verfahren 4 mit Katalyse durchgeführt, wobei die basische Katalyse besonders bevorzugt ist.

Zur sauren Katalyse können Brønsted-Säuren, wie Phosphorsäure, Schwefelsäure, Salzsäure, Eisessig, Propion- und Ameisensäure, oder deren wässrigen Lösungen sowie Lewis-Säuren, wie Litiumperchlorat, Zinktetrafluoroborat, Eisen(II)chlorid und Zinn(IV)chlorid, verwendet werden.

Als basische Katalysator eignen sich alle bekannten Verbindungen, welche die Nucleophilie der Gruppe A⁴ der eingesetzten Organosiliciumverbindungen durch Deprotonierung erhöhen, wie z.B. Benzyltrimethylammoniumhydroxid, Tetramethylammoniumhydroxid, Alkalihydroxid und Erdalkalihydroxid, Alkalialkoholate und Alkaliamide, wobei Alkalihydroxide bevorzugt sind.

Falls bei dem Verfahren 4 Katalysatoren eingesetzt werden, handelt es sich um Mengen von vorzugsweise 0,001 bis 1 Mol je Mol reaktiver Gruppe A⁴ der eingesetzten Organosiliciumverbindung.

Ein weiteres Verfahren **(Verfahren 5)** zur Herstellung der Organosiliciumverbindungen, besteht darin, dass acryl- oder methacrylfuntionelles Cyclodextrin(derivat) mit Amino-, Mercapto-, Hydroxy-, Carboxy-, Anhydrid-, Glycosido-, Phenol-, Polyglycol-, Phosphonato- oder Silalactongruppen aufweisendem Organopolysiloxan umgesetzt wird.

Bei den eingesetzten Organosiliciumverbindungen kann es sich um beliebige Amino-, Mercapto-, Hydroxy-, Carboxy-, Anhydrid-, Glycosido-, Phenol-, Polyglycol-, Phosphonato- oder Silalactongruppen aufweisende Organosiliciumverbindungen handeln.

Vorzugsweise handelt es sich bei den im Verfahren 5 eingesetzten Organosiliciumverbindungen um solche aus Einheiten der Formel

A⁵_{a⁵}R_{b}X_{c}H_{d}SiO_{(4-a⁵-b-c-d)/2} (I⁵),

worin
R, X, b, c und d die oben dafür angegebene Bedeutung haben, A⁵ gleich oder verschieden sein kann und einen Amino-, Mercapto-, Hydroxy-, Carboxy-, Anhydrid-, Glycosido-, Phenol-, Polyglycol-, Phosphonato- oder Silalactonrest bedeutet und a⁵ eine für a angegebene Bedeutung hat, mit der Maßgabe, dass die Summe a⁵+b+c+d ≤ 4 ist, und die Organosiliciumverbindung pro Molekül mindestens einen Rest A⁵ aufweist.

Bevorzugt handelt es sich bei Rest A⁵ um mit Mercapto- oder Hydroxygruppen substituierte Kohlenwasserstoffreste und deren Derivate, wie Mercaptopropyl- und Hydroxypropylrest, Aminogruppen substituierte Kohlenwasserstoffreste und deren Derivate, wie Aminopropyl-, Aminopropylaminoethylrest und Cyclohexylaminopropylrest, sowie mit Carbonsäuregruppen bzw. deren Derivaten sustituierte Kohlenwasserstoffreste, wie z.B. mit Alkansäureresten, wie dem Essigsäurerest, dem Buttersäurerest, dem Undecensäurerest; mit Säureanhydriden, wie dem Bernsteinsäureanhydridrest, und mit Estern, wie dem Undecensilylesterrest, wobei mit Aminogruppen substituierte Kohlenwasserstoffreste und deren Derivate, wie Aminopropyl-, Aminopropylaminoethylrest und Cyclohexylaminopropylrest besonders bevorzugt sind.

Bei den bevorzugten und besonders bevorzugten Spezies der eingesetzten Organosiliciumverbindungen aus Einheiten der Formel (I⁵) handelt es sich selbstverständlich um analoge Strukturen wie oben bereits im Zusammenhang mit den Organosiliciumverbindungen beschrieben.

Die eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindungen sind handelsübliche Produkte bzw. nach in der Siliciumchemie gängigen Verfahren herstellbar.

Bei dem eingesetzten acryl- oder methacrylfuntionellen Cyclodextrin(derivat) kann es sich um ein beliebiges auch bisher bekanntes Cyclodextrin(derivat), das über eine oder mehrere, gleiche oder verschiedene reaktive Acryl- oder Methacrylgruppen verfügt, handeln.

Beispiele für die eingesetzten acryl- oder methacrylfuntionellen Cyclodextrin(derivat)e sind solche der allgemeinen Formeln 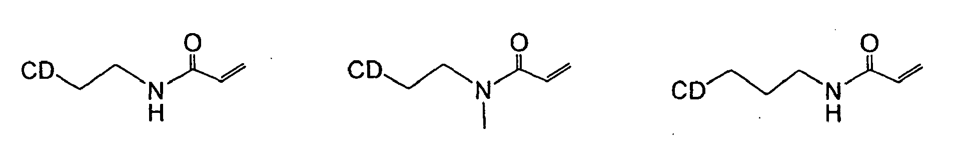 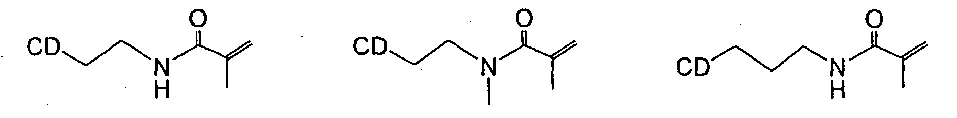 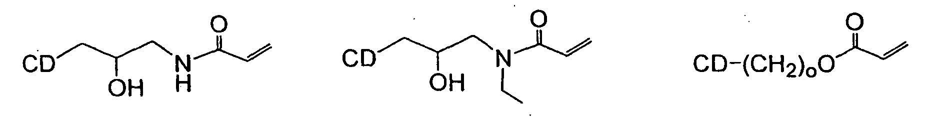 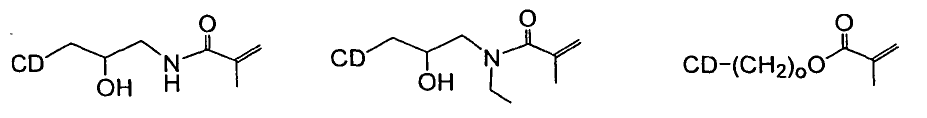 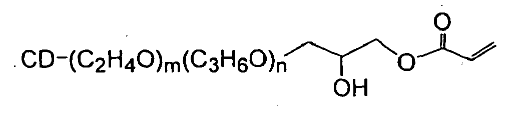 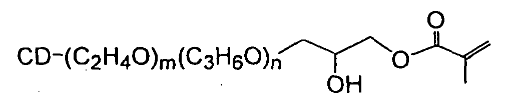 worin
CD die oben dafür angegebene Bedeutung hat,
m und n gleich oder verschieden sein können und eine ganze Zahl von 0 bis 100, bevorzugt eine ganze Zahl von 0 bis 10, bedeuten und
o eine ganze Zahl von 1 bis 35, bevorzugt eine ganze Zahl von 1 bis 12 ist.

Bei dem eingesetzten acryl- oder methacrylfuntionellen Cyclodextrin(derivat) handelt es sich bevorzugt um Acryloyl-Cyclodextrin, 2-(Acrylamido)ethyloxy-Cyclodextrin und 3-(Acrylamido)propyloxy-Cyclodextrin sowie um 2-Hydroxy-3-methacryloyl-oxypropyl-Cyclodextrin.

Bei dem Verfahren 5 wird acryl- oder methacrylfuntionelles Cyclodextrin(derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgeicht der eingesetzten Amino-, Mercapto-, Hydroxy-, Carboxy-, Anhydrid-, Glycosido-, Phenol-, Polyglycol-, Phosphonato- oder Silalactongruppen aufweisenden Organosiliciumverbindung, eingesetzt , wobei die molare Cyclodxtrinmenge maximal 95 mol-% der epoxyfunktionellen Gruppen in der eingesetzten Organosiliciumverbindung betragen darf.

Die eingesetzten acryl- oder methacrylfuntionellen Cyclodextrin(derivat)e sind handelsübliche Produkte bzw. nach in der Chemie gängigen Verfahren herstellbar.

Das Verfahren 5 kann mit oder ohne Katalyse erfolgen, wobei als Katalysator alle bekannten Verbindungen, die Michael-ähnliche Additionsreaktionen katalysieren, wie z.B. Brønsted-Säuren, wie Phosphorsäure, Schwefelsäure, Salzsäure, Eisessig, Propion- und Ameisensäure, oder deren wässrigen Lösungen, Lewis-Säuren, wie Litiumperchlorat, Zinktetrafluoroborat, Eisen(II)chlorid und Zinn(IV)chlorid, sowie Bronsted-Basen, wie Benzyltrimethylammoniumhydroxid, Tetramethylammoniumhydroxid, Alkali- und Erdalkalihydroxid, Alkalialkoholate und Alkaliamide, eingesetzt werden können.

Bevorzugt wird das Verfahren 5 mit Katalyse durchgeführt, wobei dann der Katalysator in Mengen von vorzugsweise 0,001 bis 1 Mol, je Mol Doppelbindung des eingesetzten acryl- oder methacrylfuntionellen Cyclodextrin(derivat)s verwendet wird.

Ein weiteres Verfahren **(Verfahren 6)** zur Herstellung der erfindungsgemäßen Organosiliciumverbindungen, besteht darin, dass aminofunktionelles Cyclodextrin(derivat) mit Acryl- oder Methacrylgruppen aufweisender Organosiliciumverbindung umgesetzt wird.

Bei den eingesetzten Organosiliciumverbindungen kann es sich um beliebige Acryl- oder Methacrylgruppen aufweisende Organosiliciumverbindungen handeln.

Vorzugsweise handelt es sich bei den im Verfahren 6 eingesetzten Organosiliciumverbindungen um solche aus Einheiten der Formel

A⁶_{a⁶}R_{b}X_{c}H_{d}SiO_{(4-a⁶-b-c-d)/2} (I⁶),

worin
R, X, b, c und d die oben dafür angegebene Bedeutung haben, A⁶ einen acryl- oder methacrylfunktionellen Rest bedeutet und a⁶ eine für a angegebene Bedeutung hat, mit der Maßgabe, dass die Summe a⁶+b+c+d ≤ 4 ist, und die Organosiliciumverbindung pro Molekül mindestens einen Rest A⁶ aufweist.

Beispiele für Rest A⁶ sind der 3-Acryloxy-propyl- und 3-Methacryloxypropylrest.

Bei den bevorzugten und besonders bevorzugten Spezies der eingesetzten Organosiliciumverbindungen aus Einheiten der Formel (I⁶) handelt es sich selbstverständlich um analoge Strukturen wie oben bereits im Zusammenhang mit den Organosiliciumverbindungen beschrieben.

Die eingesetzten acryl- oder methacrylfunktionellen Organosiliciumverbindungen sind handelsübliche Produkte bzw. nach in der Siliciumchemie gängigen Verfahren herstellbar.

Bei dem eingesetzten aminofunktionellen Cyclodextrin(derivat) kann es sich um ein beliebiges auch bisher bekanntes Cyclodextrin(derivat), das über eine oder mehrere, gleiche oder verschiedene mit Aminogruppen und deren Derivaten substituierte Kohlenwasserstoffreste, wie z.B. den β-Aminoethyl-, β-(N-Methyl)aminoethyl-, β-(N-Ethyl)aminoethyl-, γ-Aminopropyl-, γ-Amino-2-hydroxy-propyl-, γ-(N-Methyl)amino-2-hydroxy-propyl-, γ-(N-Ethyl)amino-2-hydroxy-propyl-, γ-(N-tert.-Butyl)amino-2-hydroxy-propyl-, γ-(N-Cyclohexyl)amino-2-hydroxypropyl-, 3-(γ-Amino-2-hydroxy-propyl-)propyl- und 3-{γ-(N-Ethyl)amino-2-hydroxy-propyl-}propylrest, verfügt, handeln.

Bevorzugt handelt es sich bei dem mit Aminogruppen und deren Derivate substituierten Kohlenwasserstoffrest um den β-Aminoethyl-, β-(N-Methyl)aminoethyl-, γ-Aminopropyl-, γ-(N-tert.-Butyl)amino-2-hydroxy-propyl- und γ-(N-Cyclohexyl)amino-2-hydroxy-propylrest.

Bei dem Verfahren 6 wird aminofuntionelles Cyclodextrin(derivat) in Mengen von bevorzugt 0,1 bis 90 Gewichtsprozent, besonders bevorzugt 1 bis 50 Gewichtsprozent, insbesondere 1 bis 30 Gewichtsprozent, jeweils bezogen auf das Gesamtgewicht der eingesetzten acryl- oder methacrylfuntionellen Organosiliciumverbindung, eingesetzt, wobei die molare Cyclodxtrinmenge maximal 95 mol-% der epoxyfunktionellen Gruppen in der eingesetzten organosiliciumverbindung betragen darf.

Die eingesetzten aminfuntionellen Cyclodextrin(derivat)e sind handelsübliche Produkte bzw. nach in der Chemie gängigen Verfahren herstellbar.

Das Verfahren 6 kann mit oder ohne Katalyse erfolgen, wobei als Katalysator alle bekannten Verbindungen, die Michael-ähnliche Additionsreaktionen katalysieren, wie z.B. Brønsted-Säuren, wie Phosphorsäure, Schwefelsäure, Salzsäure, Eisessig, Propion- und Ameisensäure, oder deren wässrigen Lösungen, Lewis-Säuren, wie Litiumperchlorat, Zinktetrafluoroborat, Eisen(II)chlorid und Zinn(IV)chlorid, sowie Brønsted-Basen, wie Benzyltrimethylammoniumhydroxid, Tetramethylammoniumhydroxid, Alkali- und Erdalkalihydroxid, Alkalialkoholate und Alkaliamide, eingesetzt werden.

Bevorzugt wird das Verfahren 6 mit Katalyse durchgeführt, wobei dann der Katalysator in Mengen von vorzugsweise 0,001 bis 1 Mol, je Mol Acryl- oder Methacrylgruppe der eingesetzten Organosiliciumverbindung verwendet wird.

Ein Vorteil von allen beschriebenen erfindungsgemäßen Verfahren besteht jeweils unabhängig voneinander darin, dass sie einfach in der Durchführung bei hoher Flexibilität sind und sowohl auf Silane, d.h. Verbindungen der Formel (I) mit a+b+c+d=4, als auch auf Polysiloxane, d.h. Verbindungen enthaltend Einheiten der Formel (I) mit a+b+c+d ≤ 3, anwendbar sind.

Des weiteren haben die erfindungsgemäßen Verfahren den Vorteil, dass durch Modifikation des Cyclodextringehaltes sowie der Polymerstrukturen und -kettenlängen bzw. der Silanstrukturen die Eigenschaften der erfindungsgemäßen Organosiliciumverbindungen, wie Substantivität, Hydrophilie, Hydrophobie, Selbstemulgierbarkeit etc., jeweils auf einfache Art und ganz gezielt eingestellt werden können.

Die erfindungsgemäßen Verfahren 1 bis 6 können jeweils unabhängig voneinander jeweils absatzweise, halbkontinuierlich oder vollkontinuierlich durchgeführt werden.

Bei den erfindungsgemäßen Verfahren 1 bis 6 erfolgen die Umsetzungen bevorzugt jeweils als 1-Phasen- oder 2-Phasen-Reaktion. Im folgenden sollen drei mögliche Varianten beschrieben werden, die gleichermaßen auf alle erfindungsgemäßen Verfahren Anwendung finden können:
- als 2-Phasen-Reaktion mit mechanischem Eintrag der zur Umsetzung benötigten Energie unter gleichzeitiger Homogenisierung der Reaktionsmischung mittels einer hohe Scherkräfte erzeugenden Vorrichtung **(Variante A),**
- als 2-Phasen-Reaktion durch Umsetzung von Dispersionen **(Variante B),** oder
- als 1-Phasen-Reaktion unter Verwendung eines gegenüber den Reaktanden inerten, aprotischen Lösungsmittels **(Variante C).**

### 2-Phasen-Reaktion mit mechanischem Energieeintrag (Variante A)

Dabei erfolgt die erfindungsgemäße Umsetzung von Cyclodextrin-(derivat) mit Organosiliciumverbindung nach Variante A unter Verwendung von nicht mischbaren Lösungsmitteln für eine oder beide Reaktanden, so dass 2 Phasen entstehen, mittels geeigneter Durchmischungsmethoden je nach Verfahren mit oder ohne Katalysator.

Geeignete Lösungsmittel für das erfindungsgemäß eingesetzte Cyclodextrin(derivat) sind solche, die gegenüber den reaktiven Gruppen des Cyclodextrin(derivat)s inert sind, wie organische aprotische Lösungsmittel, Wasser, wässrige Elektrolytlösungen, wässrige Laugen, wässrige Säuren oder organisch wässrige Mischungen aus den oben genannten aprotischen organischen Lösungsmitteln mit wässrigen Systemen. Bevorzugte organische aprotische Lösungsmittel sind Dimethylformamid und Dimethylsulfoxid. Bevorzugte wässrige Systeme sind wässrige Säuren und wässrige Laugen.

Bei dem Lösungsmittel, in dem das erfindungsgemäß eingesetzte Cyclodextrin(derivat) gelöst wird, handelt es sich bevorzugt um wässrige Systeme, wobei wässrige Lösungen von 1 bis 50 Gew.-% besonders bevorzugt sind.

Geeignete Lösungsmittel für die erfindungsgemäß eingesetzte Organosiliciumverbindung sind solche, die gegenüber den reaktiven Gruppen der Reaktanden inert sind, wie organische, aprotische Lösungsmittel, wie z.B. Toluol, Hexan, Cyclohexan oder dimere, oligomere oder polymere Siloxane, wie z.B. Hexamethyldisiloxan oder Octamethylcyclotetrasiloxan, die nicht mit dem Lösungsmittel oder Lösungsmittelgemisch des erfindungsgemäß eingesetzten Cyclodextrin(derivat)s mischbar sind.

Im Rahmen der vorliegenden Erfindung soll unter dem Begriff der Nicht-Mischbarkeit von Lösungsmitteln eine Mischbarkeit bis max. 1 Gew.-% bei 25°C und einem Druck der umgebenden Atmosphäre verstanden werden.

Die erfindungsgemäße Umsetzung gemäß Variante A wird bei einer Temperatur von bevorzugt 0 bis 200°C, besonders bevorzugt 50 bis 150°C, insbesondere 70 bis 130°C, und bevorzugt bei einem Druck der umgebenden Atmosphäre, also bei 900 bis 1100 hPa, durchgeführt. Die Reaktionszeiten liegen bevorzugt zwischen 5 Minuten und 2 Stunden, besonders bevorzugt zwischen 5 und 45 Minuten.

Nach der erfindungsgemäßen Umsetzung nach Variante A können alle bekannten, auch kontinuierliche, Durchmischungsmethoden angewandt werden, die die beiden, nicht mischbaren Phasen möglichst homogenisieren und somit eine große innere Reaktionsfläche schaffen. Geeignete Methoden zur Dispersion der Phasen sind dabei Rührwerke aller Art, bevorzugt Ultraschallsonden oder -bäder und Hochgeschwindigkeitsrührwerke, wobei Hochgeschwindigkeitsrührwerke, wie z.B. Ultra-Turrax (Janke & Kunnel, IKA Labortechnik Ultra-Turrax T 50, 1100W, 10,000 U/min) oder azentrische Dissolversysteme (Molteni, Labmax, 6 000 U/min), besonders bevorzugt sind.

Die erfindungsgemäßen Verfahren nach Variante A haben den Vorteil, dass die erfindungsgemäß erhaltenen cyclodextrinhaltigen Organosiliciumverbindungen nicht mehr aufgearbeitet werden müssen. Des weiteren haben die Verfahren nach Variante A den Vorteil, dass sie ohne Lösungsvermittler, wie primärer Alkohol, und ohne oberflächenaktive Substanzen, wie Tenside, durchgeführt werden können.

### 2-Phasen-Reaktion durch Umsetzung von Dispersionen (Variante B)

Die erfindungsgemäße Umsetzung der Ausgangsverbindungen zu den erfindungsgemäßen Organosiliciumverbindungen kann auch Dispersion, wie z. B. Micro- oder Macro-Emulsion, durchgeführt werden, wobei die erfindungsgemäß eingesetzte Organosiliciumverbindung die dispergierte Phase in der wässrigen Flotte ist und durch bekannte Art und Weise, wie etwa durch geeignete Emulgatoren, stabilisiert wird.

Das erfindungsgemäß eingesetzte Cyclodextrin(derivat) wird in einem geeigneten Lösungsmittel gelöst, bevorzugt in Wasser oder wässrigen, verdünnte Elektrolytlösungen, und zu der Dispersion gegeben oder umgekehrt. Die Umsetzung nach Variante B verläuft ebenfalls je nach Verfahren wahlweise mit oder ohne Katalysator.

Die erfindungsgemäße Umsetzung gemäß Variante B wird bei einer Temperatur von bevorzugt 0 bis 100°C, besonders bevorzugt 10 bis 50°C, insbesondere 20 bis 35°C, und bevorzugt bei einem Druck der umgebenden Atmosphäre, also bei 900 bis 1100 hPa, durchgeführt. Die Reaktionszeiten liegen bevorzugt zwischen einer und 200 Stunden, wobei die Dispersion jeweils durchmischt werden kann.

Die die erfindungsgemäß eingesetzte Organosiliciumverbindung enthaltende Dispersion kann nach beliebiger und bisher bekannter Art und Weise hergestellt werden. Dabei können beispielsweise alle Emulgatoren verwendet werden, die auch bisher zur Herstellung von Dispersionen verwendet worden sind, wie etwa nichtionische, anionische, kationische oder amphotere Emulgatoren. Die erfindungsgemäß eingesetzten Dispersionen haben einen Anteil an Organosiliciumverbindungen von bevorzugt 1 bis 50 Gewichtsprozent.

Die erfindungsgemäßen Verfahren nach Variante B haben den Vorteil, dass die erfindungsgemäß erhaltenen cyclodextrinhaltigen Organosiliciumverbindungen nach Beendigung der Umsetzung direkt in Form von Emulsionen anfallen und als solche direkt, je nach Verwendungszweck, appliziert werden können.

Falls jedoch nach Beendigung der Umsetzung eine Aufarbeitung der die erfindungsgemäßen Organosiliciumverbindungen enthaltenden Dispersion gewünscht ist, kann dies nach an sich bekannten Methoden erfolgen, wie z.B. durch Brechen der Dispersion mit konzentrierten Elektrolytlösungen oder durch Zugabe von wasserlöslichen, polaren Lösungsmitteln, wie Aceton. Vorzugsweise wird dann die Ölphase abgetrennt und anschließend aufgereinigt durch mehrmaliges Ausschütteln mit konzentrierten Elektrolytlösungen, wie z.B. mit 20 Gew.%-iger Natriumchloridlösung. Die so erhaltenen erfindungsgemäßen Organosiliciumverbindungen werden dann bevorzugt getrocknet.

### 1-Phasen-Reaktion (Variante C)

Die erfindungsgemäßen Umsetzungen der Ausgangsverbindungen zu den erfindungsgemäßen Organosiliciumverbindungen können auch homogen geführt werden. Dabei wird das erfindungsgemäß eingesetzte Cyclodextrin(derivat) in einem gemeinsamen, gegenüber den Reaktanden inerten, aprotischen organischen Lösungsmittel oder wässrig-organischen Lösungsmittelgemischen, bevorzugt in Dimethylformamid, Dimethylsulfoxid oder Hexamethylphosphorsäuretriamid, besonders bevorzugt Dimethylsulfoxid, gelöst. Die Umsetzung nach Variante C verläuft ebenfalls je nach Verfahren wahlweise mit oder ohne Katalysator.

Die erfindungsgemäße Umsetzung gemäß Variante C wird bei einer Temperatur von bevorzugt 0 bis 100°C, besonders bevorzugt 60 bis 80°C, und bevorzugt bei einem Druck der umgebenden Atmosphäre, also bei 900 bis 1100 hPa, durchgeführt. Die Reaktionszeiten liegen bevorzugt zwischen 15 Minuten und 5 Stunden.

Die erfindungsgemäßen Organosiliciumverbindungen können dann z.B. durch einfaches Abdestillieren des Lösungsmittels oder des Lösungsmittelgemisches isoliert werden.

Die erfindungsgemäße Umsetzung gemäß Variante C hat den Vorteil, dass sie auf einfache Art und Weise mit einfachen Apperaturen durchgeführt werden kann und die erfindungsgemäßen Organosiliciumverbindungen in Reinform erhalten werden.

Alle der nach den Varianten A, B oder C durchgeführten, erfindungsgemäßen Verfahren haben den Vorteil, dass sie sehr einfach in der Durchführung sind, und und die erfindungsgemäßen Organosiliciumverbindungen reproduzierbar und mit sehr hoher Ausbeute, vorzugsweise 90 bis 99%, hergestellt werden können.

Die erfindungsgemäßen Organosiliciumverbindungen werden bevorzugt nach Variante A oder B, jeweils gegebenenfalls in Kombination mit einem Equilibrierungsschritt, durchgeführt.

Falls erwünscht, können die nach den erfindungsgemäßen Verfahren erhaltenen, cyclodextrinreste aufweisenden Organosiliciumverbindungen mit Organopolysiloxanen, bevorzugt ausgewählt aus der Gruppe bestehend aus linearen, endständige Triorganosiloxygruppen aufweisenden Organopolysiloxanen, linearen, endständige Hydroxylgruppen aufweisende Organopolysiloxanen, cyclischen Organopolysiloxanen und Mischpolymerisaten aus Diorganosiloxan- und Monoorganosiloxaneinheiten, equilibriert werden, wodurch beispielsweise die Einstellung des gewünschten Molekulargewichts sowie die gezielte Verteilung der Cyclodextringruppen im Molekül und gegebenenfalls die Einführung weiterer Funktionalitäten ermöglicht wird.

Vorzugsweise werden als lineare, endständige Triorganosiloxygruppen aufweisenden Organopolysiloxane solche der Formel

R⁵₃SiO(SiR⁵₂O)ₚSiR⁵₃ (IV),

als lineare, endständige Hydroxylgruppen aufweisende Organopolysiloxane solche der Formel

HO(SiR⁵₂O)_{q}H (V),

als cyclischen Organopolysiloxane solche der Formel

(SiR⁵₂O)ᵣH (VI),

und als Mischpolymerisate solche aus Einheiten der Formel

R⁵₃SiO_{1/2}, R⁵₂SiO und R⁵SiO_{3/2}

eingesetzt, wobei
R⁵ jeweils gleich oder verschieden sein kann und eine für R angegebene Bedeutung hat,
p 0 oder eine ganze Zahl von 1 bis 1500 ist,
q 0 oder eine ganze Zahl von 1 bis 1500 ist und
r eine ganze Zahl von 3 bis 12 ist.

Die Mengenverhältnisse der bei der gegebenenfalls durchgeführten Equilibrierung eingesetzten Organopolysiloxane und erfindungsgemäß hergestellten Organosiliciumverbindungen werden lediglich durch den gewünschten Anteil der Cyclodextringruppen in den bei der gegebenenfalls durchgeführten Equilibrierung erzeugten Organosiliciumverbindung und durch die gewünschte mittlere Kettenlänge bestimmt.

Bei der gegebenenfalls durchgeführten Equilibrierung werden vorzugsweise basische Katalysatoren, welche die Equilibrierung fördern, eingesetzt.

Beispiel für solche Katalysatoren sind Benzyltrimethylammoniumhydroxid, Tetramethylammoniumhydroxid, Alkalihydroxid und Erdalkalihydroxid in methanolischer Lösung, z.B. solche mit einem Gehalt zwischen 5 und 20 Gew.% NaOH oder KOH), sowie Silanolate. Bevorzugt sind hierbei Alkalihydroxide, welche in Mengen von vorzugsweise 50 bis 10000 Gew.-ppm (Teile je Million), insbesondere 500 bis 2000 Gew.-ppm, jeweils bezogen auf das Gesamtgewicht der eingesetzten Organosiliciumverbindungen, verwendet wird. Vor dem Aufarbeiten des bei dem erfindungsgemäßen Equilibrieren erhaltenen Gemisches kann der Katalysator unwirksam gemacht werden.

Die gegebenenfalls durchgeführte Equilibrierung wird vorzugsweise bei einer Temperatur von bevorzugt 50 bis 150°C, besonders bevorzugt 70 bis 120°C, und bevorzugt bei einem Druck der umgebenden Atmosphäre, also bei 900 bis 1100 hPa, durchgeführt.

Die Equilibrierung kann aber auch bei höheren oder niedrigeren Drücken durchgeführt werden.

Das Equilibrieren kann, falls erwünscht, in mit Wasser nicht mischbarem Lösungsmittel, wie Toluol, durchgeführt werden, was jdoch nicht bevorzugt ist. Falls solche organischen Lösungsmittel jedoch eingesetzt werden, sind Mengen von 5 bis 20 Gew.-%, bezogen auf das Gesamtgewicht der eingesetzten Organosiliciumverbindungen, bevorzugt.

Die erfindungsgemäßen bzw. erfindungsgemäß hergestellten Organosiliciumverbindungen haben desweiteren den Vorteil, dass sie stabil sind, d.h. bei Raumtemperatur und unter Druck der umgebenden Atmosphäre für mindestens 1 Jahr lagerstabil sind.

Ein weiterer Vorteil der vorliegenden Erfindung besteht darin, dass die erfindungsgemäßen bzw. erfindungsgemäß hergestellten Organosiliciumverbindungen in Substanz, in Lösung oder in Form von Emulsionen und Dispersionen verwendet werden können.

Die erfindungsgemäßen bzw. erfindungsgemäß hergestellten Organosiliciumverbindungen können für viele Zwecke eingesetzt werden, für die auch bisher Cyclodextrin(derivate) bzw. Organosiliciumverbindungen eingesetzt worden sind. Der Vorteil besteht darin, dass die erfindungsgemäßen bzw. erfindungsgemäß hergestellten Organosiliciumverbindungen die Eigenschaften der Cyclodextrine mit denen der Organosiliciumverbindungen, wie Silicone, vereinen. Die erfindungsgemäßen Organosiliciumverbindungen können daher überall dort eingesetzt werden, wo zugleich die Eigenschaften von Siliconen, wie z.B. Hydrophobierung, Schmutzabweisung, Schutz, Weichgriff usw., kombiniert mit denen von Cyclodextrinen, wie z.B. Hydrophilie, sog. Host-Guest-Effekten usw., gefordert sind.

Die erfindungsgemäßen bzw. erfindungsgemäß hergestellten Organosiliciumverbindungen können als Wirkstoffträger, als Absorbens von Gerüchen oder Geruchststoffen, als Textilhilfsmittel, als Phasenvermittler, als Anti-Schaummittel, als Zusatz zu Kosmetika oder Shampoos, in der Lackpflege, wie z B. für Autolacke, zur Modifizierung harter Oberflächen und als Bestandteil oder Additiv in selbst-härtenden Füll- und Dichtmaterialien verwendet werden.

Besonders geeignet sind die erfindungsgemäßen bzw. erfindungsgemäß hergestellten Organosiliciumverbindungen zur Ausrüstung von organischen Fasern, bevorzugt textilen Materialien, und Leder.

Ein weiterer Gegenstand der vorliegenden Erfindung ist ein Verfahren zur Behandlung von organischen Fasern, dadurch gekennzeichnet, dass erfindungsgemäße bzw. erfindungsgemäß hergestellte Organosiliciumverbindungen auf die zu behandelnden Fasern bzw. textilen Flächengebilden aufgebracht werden.

Dies kann z.B. durch Sprühen, vorzugsweise aber durch Foulardapplikation aus wässrigen Systemen erfolgen. Dazu wird eine Emulsion der erfindungsgemäßen bzw. erfindungsgemäß hergestellten, Cyclodextrinreste aufweisenden Organosiliciumverbindung auf ein textiles Flächengebilde, wie Gewebe, Gewirke oder sog. Nonwovens, oder auf ein Faserkabel aufgebracht. Im Sprühprozess kann dies mittels eines Sprühkopfes, Sprühbalkens oder einer Tellersprühvorrichtung, wie z.B. der in der Textilindustrie bekannten Weko-Maschine, geschehen.

Bei der sog. Foulardapplikation wird das textile Substrat durch ein Tauchbad geführt und anschließend mittels eines Walzenpaares auf eine definierte Flottenaufnahme abgequetscht. Durch die Konzentration der Behandlungsflotte und die Flottenaufnahme kann die Beladung des textilen Substrates mit der erfindungsgemäßen Cyclodextrinreste aufweisenden Organosiliciumverbindung gesteuert werden.

Sollte die erfindungsgemäße Einführung von Cyclodextringruppen aufweisenden Organosiliciumverbindungen an das Textil den Zweck haben, Duftstoffe permanent zu applizieren, so kann die Beladung des Cyclodextrins mit dem Duftstoff, wie in den nachfolgenden Ausführungsbeispielen erläutert, im Zuge des erfindungsgemäßen Verfahrens zur Herstellung der Cyclodextringruppen aufweisenden Organosiliciumverbindungen durchgeführt werden. Die erfindungsgemäß ausgerüsteten Stoffe aus cellulosischem Subtrat zeigen vorteilhafterweise angenehmen textilen Warengriff und sind in der Lage Parfüms und Duftstoffe über längere Zeit zu speichern und diese erst nach Einwirkung von Körperwärme und Feuchtigkeit langsam und gezielt abzugeben. Bei Applikation unbeladener Cyclodextrine bzw. nach Freisetzung der Duftstoffe sind derartig ausgerüstete Stoffe in der Lage, Gerüche zu absorbieren und somit einen Frischeeffekt zu bewirken. Statt Duftstoffen können natürlich auch andere Wirkstoffe, wie beispielsweise insektizide, herbizide, medizinisch oder biologisch wirksame Agenzien, in bekannter Weise als Gastmoleküle in die Cyclodextrine eingelagert werden.

Das erfindungsgemäße Verfahren zur Behandlung von organischen Fasern hat den Vorteil, dass die durch die erfindungsgemäßen bzw. erfindungsgemäß hergestellten Organosiliciumverbindungen behandelten organischen Fasern einen angenehmen Weichgriff haben.

Die erfindungsgemäßen bzw. erfindungsgemäß hergestellten Organosiliciumverbindungen haben des weiteren den Vorteil, dass sie direkt in wässrigem Medium, z.B. aus Emulsion, appliziert werden können.

Das erfindungsgemäße Verfahren zur Behandlung von organischen Fasern hat den Vorteil, dass die Cyclodextrinreste aufweisende Organosiliciumverbindungen im Zuge der Textilausrüstung nach erfindungsgemäßer Verfahrensvariante B direkt aus den Edukten, die in situ miteinender reagieren, durchgeführt werden kann.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Unter Aminzahl soll im folgenden die Zahl verstanden werden, die der Anzahl von ml 1N HCl entspricht, die zur Neutralisation von 1 g Substanz erforderlich ist.

### Beispiel 1

100 g eines aminoalkylfunktionalisierten, mit Trimethylsilylgruppen terminierten Siliconöls der unten näher bezeichneten Art werden in einem Becherglas vorgelegt. Mit einem Ultra-Turrax (Janke & Kunnel, IKA Labortechnik Ultra-Turrax T 50, 1100W, 10 000 U/min) dispergiert.man die in Tabelle 1 angegebene Menge Cyclodextrin, jeweils gelöst in der 1,2-fachen Menge Wasser, ein und arbeitet die Reaktionsmischung 90 bis 120 Minuten gut durch. Dabei steigt die Temperatur je nach Viskosität des eingesetzten Siliconöls auf etwa 50 bis 80°C. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 1**

| Beispiel | eingesetztes Siliconöl | Aminzahl des eingesetzten Siliconöls [mequiv. N/g] | Viskosität des eingesetzten Aminöls [mm²/s] | eingesetzte Menge Cyclodextrin [Gew.-%]^{†} | Viskosität des cyclodextrinhaltigen Siliconöls [mm²/s] |
|---|---|---|---|---|---|
| **1a** | A | 0,09 | 300 | 3,4 | 400 |
| **1b** | A | 0,09 | 300 | 5,9 | 550 |
| **1c** | B | 0,60 | 1200 | 10,0 | 5680 |
| **1d** | B | 0,60 | 1200 | 17,5 | 9750 |

| | | | | | |
|---|---|---|---|---|---|
| ^{†} bezogen auf das Gesamtgewicht des eingesetzten Siliconöls | | | | | |

Bei dem in den Beispielen 1a - d eingesetzten Cyclodextrin handelt es sich um 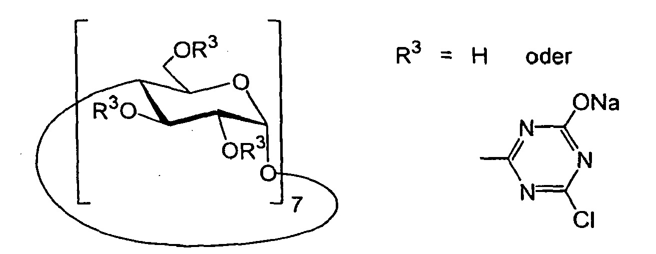 welches unter dem Handelsnamen CAVASOL^{®} W7 MCT bei der Firma Wacker-Chemie GmbH, D-München käuflich erhältlich ist. Die Siloxane A und B sind im folgenden beschrieben, wobei Me Methylrest bedeutet.

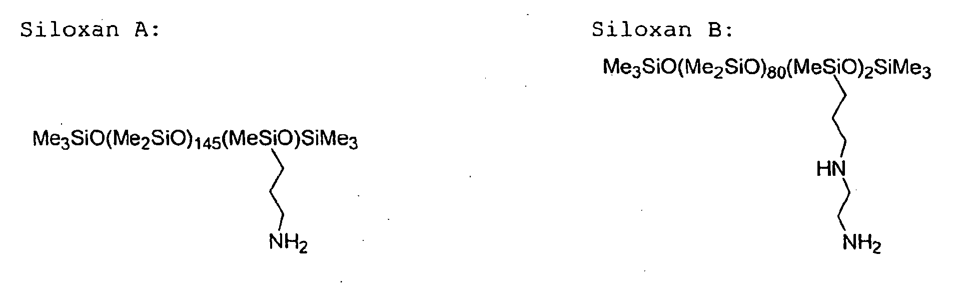

### Beispiel 2

100 g eines mit Trimethylsilylgruppen terminierten Siliconöls der unten näher bezeichneten Art werden in einem Becherglas vorgelegt. Mit einem azentrischen Dissolversystem (Molteni, Labmax, 6 000 U/min) dispergiert man in den Beispielen 2b-e 5 Minuten lang die Menge Hilfsbase ein, welche der Anzahl H-acider Gruppen des verwendeten Siliconöls equivalent ist. Danach gibt man die in Tabelle 2 angegebene Menge Cyclodextrin, jeweils gelöst in der 1,2-fachen Menge Wasser, zu und arbeitet dies 90 bis 120 Minuten ein. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 2**

| Beispiel | eingesetztes Siliconöl | Viskosität des eingesetzten Siliconöls [mm²/s] | eingesetzte Menge Cyclodextrin [Gew.-%]^{†} | Viskosität des cyclodextrinhaltigen Siliconöls [mm²/s] |
|---|---|---|---|---|
| **2a** | C | 5300 | 5 | 6350 |
| **2b** | D^{a)} | 50 | 10 | 1350 |
| **2c** | E^{a)} | 13600 | 5 | 15000 |
| **2d** | F^{a)b)} | 150 | 2,5 | 1280 |
| **2e** | G^{c)} | 900 | 5 | 3050 |

| | | | | |
|---|---|---|---|---|
| ^{†} bezogen auf das Gesamtgewicht des eingesetzten Siliconöls a) Hilfsbase: Triethylamin b) 50%ige wässrige Lösung; CD als Feststoff zugeben c) Hilfsbase: ^{t}BuOK | | | | |

Das in den Beispielen 2a-e eingesetzte Cyclodextrin ist in Beispiel 1 beschrieben. Die Siloxane C bis G sind im folgenden beschrieben, wobei Me Methylrest bedeutet.

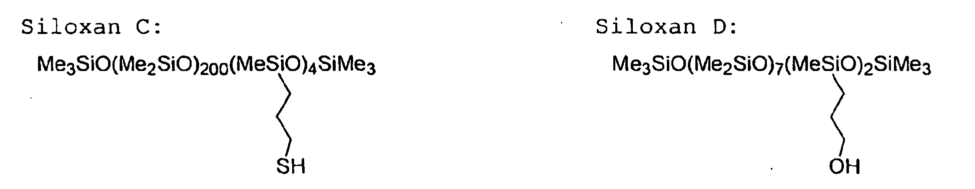

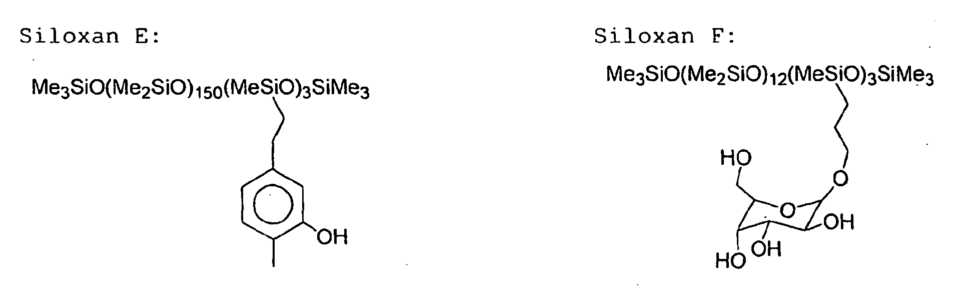

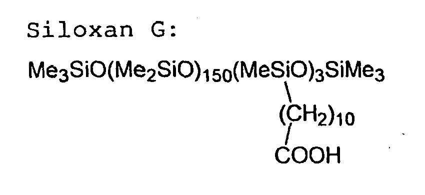

### Beispiel 3

Zu 100 g Emulsion bestehend aus
- 17,5 Gew.-% aminoethylaminopropylfunktionalisiertem Organopolysiloxan mit Trimethylsilylendgruppen und einer mittleren Kettenlänge von ca. 150 sowie der in Tabelle 3 angegebenen Aminzahl und ca.
- 10 Gew.-% ethoxylierte Fettsäure mit einer Kettenlängenverteilung zwischen 12 und 18 C-Atomen sowie
- 72,5 Gew.-% Wasser
wird bei Raumtemperatur jeweils die in Tabelle 3 angegebene Menge Cyclodextrin, jeweils gelöst in 1 g Wasser, unter Rühren zugegeben. Die jeweils erhaltene Emulsion wird dann 7 Tage bei Raumtemperatur gelagert und anschließend mit 20%iger Natriumchloridlösung gebrochen. Das so erhaltene, cyclodextrinhaltige Siliconöl wird noch 10 mal mit je 100 g 20%iger NaCl-Lösung nachgewaschen. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 3**

| Beispiel | Aminzahl der Siliconöl-Emulsion | eingesetzte Menge Cyclodextrin | Cyclodextringehalt relativ zum Amingehalt |
|---|---|---|---|
| **3a** | 0,6 | 390 mg | 5 % |
| **3b** | 0,2 | 390 mg | 15 % |

Das in den Beispielen 3a und 3b eingesetzten Cyclodextrin ist in Beispiel 1 beschrieben.

### Beispiel 4

100 g eines in Beispiel 1 beschriebenen Siliconöls (aminopropylfunktionalisiert, mit Trimethylsilylgruppen terminiert) werden in 250 ml Dimethylsulfoxid gelöst. Dazu gibt man eine Lösung von 5,3 g des in Beispiel 1 beschriebenen Cyclodextrins in 25 ml Dimethylsulfoxid. Das Reaktionsgemisch wird für eine Stunde auf 80°C erwärmt. Anschließend destilliert man bei 80°C und Vollvakuum das Lösungsmittel ab. Es wird ein cyclodextrinhaltiges Siliconöl mit einer Viskosität von 500-600 mm²/s erhalten, das keinerlei Ausflockung oder Ausfällung des Cyclodextrins über Monate hinweg zeigt.

### Beispiel 5

100 g des in Beispiel 2 als Siloxan G beschriebenen Siliconöls (Undecansäurefunktionalisiert, mit Trimethylsilylgruppen terminiert) werden in 250 ml Dimethylsulfoxid suspendiert, mit einer den Carboxylgruppen equivalenten Menge KOH versetzt und bei Raumtemperatur 30 Minuten gerührt. Dazu gibt man eine Lösung von 4,1 g des in Beispiel 1 beschriebenen Cyclodextrins in 20 ml Dimethylsulfoxid und erwärmt das Reaktionsgemisch wird für eine Stunde auf 80°C. Anschließend filtriert man vom gebildeten Feststoff (KCl) ab und entfernt bei 80°C im Vollvakuum das Lösungsmittel durch Destillation. Es wird ein cyclodextrinhaltiges Siliconöl mit einer Viskosität von 1030 mm²/s erhalten, das keinerlei Ausflockung oder Ausfällung des Cyclodextrins über Monate hinweg zeigt.

### Beispiel 6

100 g eines aminoalkylfunktionalisierten, mit Trimethylsilylgruppen terminierten Siliconöls der unten näher bezeichneten Art werden in einem Becherglas vorgelegt. Mit dem in Beispiel 1 beschriebenen Ultra-Turrax dispergiert man die in Tabelle 4 angegebene Menge Cyclodextrinderivat, jeweils gelöst in der 1,2-fachen Menge Wasser, ein und arbeitet die Reaktionsmischung 90 bis 120 Minuten gut durch. Dabei steigt die Temperatur je nach Viskosität des eingesetzten Siliconöls auf etwa 50 bis 80°C. Nach dem Abdestillieren des verbliebenen Restwassers werden cyclodextrinhaltige Siliconöle erhalten, die keinerlei Ausflockung oder Ausfällung des Cyclodextrins über Monate hinweg zeigen.

**Tabelle 4**

| Beispiel | eingesetztes Siliconöl | Aminzahl des eingesetzten Siliconöls [mequiv. N/g] | Viskosität des eingesetzten Aminöls [mm²/s] | eingesetzte Menge Cyclodextrin [Gew.-%]^{†} | Viskosität des cyclodextrinhaltigen Siliconöls [mm²/s] |
|---|---|---|---|---|---|
| **6a** | C | 0,86 | 300 | 2 | 625 |
| **6b** | D | 0,62 | 950 | 2 | 3530 |

| | | | | | |
|---|---|---|---|---|---|
| ^{†} bezogen auf das Gesamtgewicht des eingesetzten Siliconöls | | | | | |

Bei dem in den Beispielen 6a und 6b eingesetzten Cyclodextrin handelt es sich um 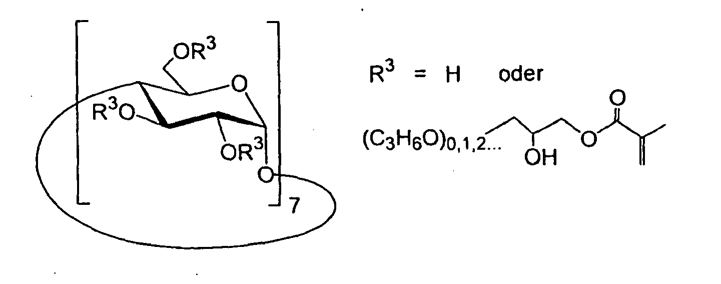 welches als "BETA W7 MAHP 0.1/0.4" bei der Firma Wacker-Chemie GmbH, D-München erhältlich ist und einen Gehalt von durchschnittlich 0,9 Mol Methacrylat/Cyclodextrin hat. Die Siloxane C und D sind im folgenden beschrieben, wobei Me Methylrest bedeutet.

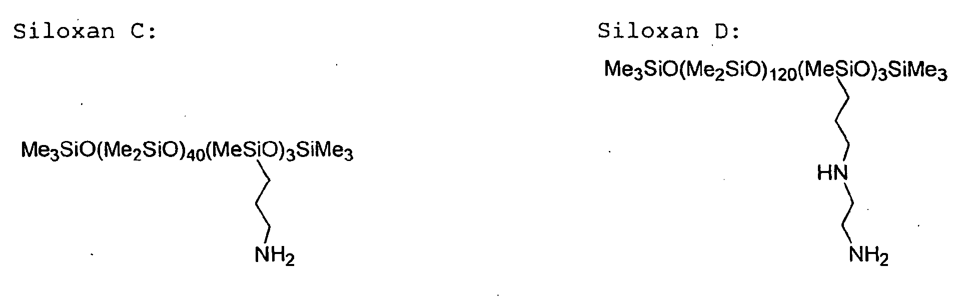

### Beispiel 7

100 Teile eines monochlortriazinylfunktionellen β-Cyclodextrins (käuflich erhältlich unter der Bezeichnung CAVASOL^{®} W 7 MCT bei der Wacker-Chemie GmbH, D-München) wurden in 700 Teilen destilliertem Wasser gelöst und die Lösung mit Zitronensäure auf pH 5 eingestellt. 7 Teile Parfümöl (käuflich erhältlich unter der Bezeichnung "Black Magic Y5" der Fa. Cosmaderm D-Ladenburg) wurden unter Rühren zugegeben. Durch Einlagerung in das Cyclodextrin verschwindet das wasserunlösliche Parfümöl in der wässrigen Lösung. Die Lösung wurde mit 80 Teilen einer Mikroemulsion enthaltend 17 Teile eines linearen mit Hydroxydimethylgruppen terminierten Dimethyl/Methyl, Aminoethylaminopropyl-Siloxanes der Aminzahl 0,6 und der Viskosität 1000 mm²/s sowie 6,6 Teilen Emulgatoren (iso-C13 Fettalkohol x 5-8 EO) (Mikroemulsion ist käuflich erhältlich unter der Bezeichnung "Finish 46016 VP" bei der Wacker-Chemie GmbH, D-München) versetzt und 10 Minuten gerührt.

Es wird Cyclodextringruppen aufweisendes Organopolysiloxan mit einer Restaminzahl von 0,08 in Emulsionsform erhalten mit guten Gebrauchseigenschaften als Weichmacher und langanhaltender Duftnote erhalten.

0,65 kg der so erhaltenen Emulsion wurden am Foulard auf 1 kg eines Mischgewebes aus 98 % Wolle und 2 % Elasthanfaser (Spandex) aufgegeben, wobei eine Flottenaufnahme von 65 % resultierte. Die anschließende Trocknung erfolgte zunächst 3 Minuten bei 90°C und dann 3 Minuten bei 150°C.

Das so behandelte Textilsubstrat weist einen angenehmen Griff auf und kann das eingelagerte Parfümöl über mehrere Monate speichern, jedoch bei gleichzeitiger Einwirkung von Körperwärme und Feuchtigkeit, also unter Tragebedingungen, dosiert abgeben.

### Beispiel 8

Die in Beispiel 1 angegebene Verfahrensweise wird wiederholt mit der Abänderung, dass als Parfümöl 8 Teile Rosenöl (käuflich erhältlich unter der Bezeichnung "Typ 131650" bei der Fa. Kurt Kitzing, D-Wallerstein) eingestzt wurde. Die Applikation erfolgte auf Baumwoll-Wirkware, die zu T-Shirts verarbeitet werden sollte. Das Textilsubstrat war durch eine monatelang anhaltende Duftnote gekennzeichnet.

### Beispiel 9

100 Teile Monochlortriazin-funktionelles β-Cycledextrin (käuflich erhältlich unter dem Namen CAVASOL^{®} W 7 MCT bei der Wacker-Chemie GmbH, D-München) wurden in 800 Teilen Wasser gelöst und mit Zitronensäure auf pH 5 gestellt. Die Lösung wurde mit 7 Teilen Parfümöl (käuflich erhältlich unter der Bezeichnung "Fragrance Patricia Y" bei der Fa. Cosmaderm, D-Ladenburg) versetzt und 5 Minuten gerührt. Nach dieser Zeit war das Parfümöl trotz Wasserunlöslichkeit in den Kavitäten des Cyclodextrines eingelagert und optisch aus dem wässrigen System verschwunden. Die Lösung wurde mit 30 Teilen einer 35 %igen Emulsion eines Aminöles der Viskosität 4000 mm²/s und der Aminzahl 0,15 (Aminoethylaminopropyl-funktonelles Silicon) sowie 5 Teilen Emulgator (C13-Fettalkoholethoxylat) 0,3 Teilen Polyalkoxyoligosiloxan als Vernetzer und 0,5 Teilen Katalysator auf der Basis von Dialkylzinndilaurat (käuflich erhältlich unter der Bezeichnung "Finish CT 45 E" bei der Wacker-Chemie GmbH, D-München) versetzt. Die Behandlungsflotte wurde auf ein Mischgewebe Baumwolle/Elasthan 98:2 Twill mit einer Flottenaufnahme von 70 % auffoulardiert und 3 Minuten bei 90°C sowie 3 Minuten bei 150°C getrocknet. Es resultierte ein Gewebe mit angenehmen Warengriff und langanhaltender Duftnote.

### Beispiel 10

Die in Beispiel 9 beschriebene Verfahrensweise wird wiederholt mit der Abänderung, dass als Parfümöl 6 Teile Citral 54450 der Fa. Drohm, Deutschland eingesetzt werden. Es resultierte ein Textilsubstrat mit angenehmem Frischeduft.

Wird ein nach den Beispielen 7 bis 10 ausgerüstetes Kleidungsstück längere Zeit getragen, so wird langsam der gesamte Duft abgegeben. Das Kleidungsstück kann dann einer normalen Haushaltswäsche unterzogen werden. Während der Tumblertrocknung ist eine erneute Befüllung der Cylclodextrinkavitäten mit Parfümöl durch Zugabe des Parfüms in den Tumbler möglich. Dies beweist, dass der Substratkomplex Cyclodextrinaminosilicon waschbeständig auf dem Textilsubstrat fixiert wurde.

## Patentansprüche

1. Cyclodextrinreste aufweisende Organosiliciumverbindungen enthaltend Einheiten der Formel
AₐR_{b}X_{c}H_{d}SiO_{(4-a-b-c-d)/2} (I),
wobei
A gleich oder verschieden sein kann und einen Rest der Formel
CD-R²- (II)
bedeutet, wobei
CD ein- oder mehrwertiger, gegebenenfalls derivatisierter Cyclodextrinrest bedeutet und R² ein gegebenenfalls substituierter Triazinylrest bedeutet,
R gleich oder verschieden sein kann und einen gegebenenfalls substituierten Kohlenwasserstoffrest, der durch Sauerstoffatome, Schwefelatome und/oder Stickstoffatome unterbrochen sein kann, bedeutet,
X gleich oder verschieden sein kann und einen Rest der Formel -OR¹ mit R¹ gleich Wasserstoffatom oder gegebenenfalls substituierten Kohlenwasserstoffrest, der durch Ethersauerstoffatome substituiert sein kann, bedeutet,
a 0, 1 oder 2 ist
b 0, 1, 2 oder 3 ist,
c 0, 1, 2 oder 3 ist und
d 0, 1, 2 oder 3 ist,
mit der Maßgabe, dass
- die Summe a+b+c+d ≤ 3 ist,
- die Organosiliciumverbindung pro Molekül mindestens einen Rest A aufweist und
- in keiner Einheit der Formel (I) die Summe aus a+b+c+d=0 ist,
wobei das zur chemischen Bindung von CD an R² verwendete Cyclodextrin-Sauerstoffatom gegen S, NH oder NR⁰ mit R⁰ gleich einer für Rest R oben angegebener Bedeutung, ersetzt sein kann.

2. Verfahren zur Herstellung der Organosiliciumverbindungen gemäß Anspruch 1, **dadurch gekennzeichnet, dass** halogentriazinfunktionelles Cyclodextrin(derivat) mit Amino-, Mercapto-, Hydroxy-, Carboxy-, Anhydrid-, Glycosido-, Phenol-, Polyglycol-, Phosphonato- oder Silalactongruppen aufweisender Organosiliciumverbindung umgesetzt wird.

3. Verfahren zur Behandlung von organischen Fasern, **dadurch gekennzeichnet, dass** Organosiliciumverbindungen gemäß Anspruch 1 bzw. hergestellt nach dem Verfahren gemäß Anspruch 2 auf die zu behandelnden Fasern bzw. textilen Flächengebilden aufgebracht werden.

## Claims

1. Cyclodextrinyl-containing organosilicon compounds comprising units of the formula
AₐR_{b}X_{c}H_{d}SiO_{(4-a-b-c-d)/2} (I)
where
A may in each occurrence be the same or different and is a radical of the formula
CD-R²- (II)
where
CD is a mono- or multivalent derivatized or underivatized, cyclodextrin residue and R² is a substituted or unsubstituted triazinylene radical,
R may in each occurrence be the same or different and is a substituted or unsubstituted hydrocarbyl radical which may be interrupted by oxygen atoms, sulphur atoms and/or nitrogen atoms,
X may in each occurrence be the same or different and is a radical of the formula -OR¹ where R¹ is a hydrogen atom or substituted or unsubstituted hydrocarbyl with or without substitution by ether oxygen atoms,
a is 0, 1 or 2,
b is 0, 1, 2 or 3,
c is 0, 1, 2 or 3, and
d is 0, 1, 2 or 3,
with the proviso that
- the sum a+b+c+d is ≤ 3,
- the organosilicon compound has at least one A radical per molecule and
- none of the units of the formula (I) has the sum of a+b+c+d being equal 0,
wherein the cyclodextrin oxygen atom used for the chemical attachment of CD to R² may be replaced by S, NH or NR⁰ where R⁰ has one of the meanings indicated above for R.

2. Process for preparing the organosilicon compounds according to Claim 1, **characterized in that** a halotriazine-functional cyclodextrin (derivative) is reacted with an organosilicon compound containing amino, mercapto, hydroxyl, carboxyl, anhydride, glycosido, phenol, polyglycol, phosphonato or silalactone groups.

3. Process for treating organic fibres, **characterized in that** organosilicon compounds according to Claim 1 or prepared by the process according to Claim 2 are applied to the fibres or fabrics to be treated.

## Revendications

1. Composés organosiliciés renfermant des radicaux cyclodextrine, comprenant des motifs de formule
AₐR_{b}X_{c}H_{d}SiO_{(4-a-b-c-d)/2} (I),
dans laquelle
A peut être identique ou différent et représente un radical de formule
CD-R²- (II)
dans lequel
CD représente un radical cyclodextrine monovalent ou multivalent, éventuellement dérivatisé, et R² représente un radical triazinyle éventuellement substitué,
R peut être identique ou différent et représente un radical hydrocarboné éventuellement substitué, qui peut interrompu par des atomes d'oxygène, des atomes de soufre et/ou des atomes d'azote,
X peut être identique ou différent et représente un radical de formule -OR¹ dans lequel R¹ représente un atome d'hydrogène ou un radical hydrocarboné éventuellement substitué, qui peut être substitué par des atomes d'oxygène d'éther,
a vaut 0, 1 ou 2,
b vaut 0, 1, 2 ou 3,
c vaut 0, 1, 2 ou 3 et
d vaut 0, 1, 2 ou 3,
à condition que
- la somme a+b+c+d soit ≤ 3,
- le composé organosilicié renferme au moins un radical A par molécule, et
- la somme de a+b+c+d=0 dans aucun motif de formule (I),
où l'atome d'oxygène de cyclodextrine utilisé pour la liaison chimique de CD à R² peut être remplacé par un atome de soufre, un groupe NH ou un groupe NR⁰ dans lequel R⁰ présente une signification indiquée ci-dessus pour le radical R.

2. Procédé de préparation des composés organosiliciés selon la revendication 1, **caractérisé en ce qu'**un (dérivé de) cyclodextrine à fonction halogénotriazine est mis à réagir avec un composé organosilicié renfermant des groupes amino, mercapto, hydroxy, carboxy, anhydride, glycosido, phénol, polyglycol, phosphonato ou silalactone.

3. Procédé de traitement de fibres organiques, **caractérisé en ce que** des composés organosiliciés selon la revendication 1 ou préparés conformément au procédé selon la revendication 2 sont appliqués sur les fibres ou les structures planes textiles à traiter.
